# EUROPEAN PATENT APPLICATION

(11) **EP 3 696 948 A1**
(43) Date of publication of application: **19.08.2020**
(21) Application number: 18884718.0
(22) Date of filing: 30.11.2018
(51) Int. Cl.: H02K 3/12, H02K 3/04, H02K 15/085

(54) **ARMATURE AND METHOD FOR MANUFACTURING SAME**

(30) Priority: 30.11.2017 JP 2017231093
(71) Applicant: AISIN AW CO., LTD., Anjo-shi, Aichi 444-1192 (JP)
(72) Inventor: KOGA, Kiyotaka, Anjo-shi Aichi 444-1192 (JP); SUGIHARA, Tomotsugu, Anjo-shi Aichi 444-1192 (JP)
(74) Representative: Kramer Barske Schmidtchen Patentanwälte PartG mbB
(86) International application number: PCT/JP2018/044284
(87) International publication number: WO 2019/107567

(57) **Abstract**

In a stator, at least a part of a first facing surface in which at least a part of a first leg portion directs to one side in the radial direction and at least a part of a second facing surface in which at least a part of a second leg portion directs to the other side in the radial direction are joined to each other, and a first other end surface of the first leg portion is disposed so as to project toward the other side in the radial direction with respect to a second other end surface which is continuous with the second facing surface.

## Description

### TECHNICAL FIELD

The present invention relates to an armature and a method of manufacturing an armature.

### BACKGROUND ART

There has hitherto been known an armature that includes an armature core provided with a plurality of slots that extend in the center axis direction. Such an armature is disclosed in Japanese Unexamined Patent Application Publication No. 2015-23771 (JP 2015-23771 A), for example.

JP 2015-23771 A discloses a rotary electric machine stator (hereinafter referred to as a "stator") that includes a stator core provided with a plurality of slots that extend in the axial direction. The stator includes a coil constituted by joining the distal end portion of a first-side conductor segment, which is disposed on one axial side of the stator core, and the distal end portion of a second-side conductor segment, which is disposed on the other axial side of the stator core, to each other. A projecting portion is formed at the distal end portion of the first-side conductor segment, and a recessed portion is formed at the distal end portion of the second-side conductor segment. The distal end portion of the first-side conductor segment and the distal end portion of the second-side conductor segment are joined to each other by heating the first-side conductor segment and the second-side conductor segment while being pressed against each other from both sides in the axial direction with the projecting portion and the recessed portion engaged with each other with a bonding material disposed between the projecting portion and the recessed portion.

### Related-Art Documents

### Patent Documents

Patent Document 1: Japanese Unexamined Patent Application Publication No. 2015-23771 (JP 2015-23771 A)

### SUMMARY OF THE INVENTION

### Problem to be Solved by the Invention

Here, in order to improve the quality of the joint between the first-side conductor segment and the second-side conductor segment, a uniform pressing force against the joint portion is required. Although not clearly described in JP 2015-23771 A, it is considered that portions (coil end portions) of the first-side conductor segment and the second-side conductor segment on the axially outer side of the stator core (slots) are pressed in the axial direction when the first-side conductor segment and the second-side conductor segment are pressed from both sides in the axial direction. In this case, it is considered that the respective pressing forces applied to the projecting portion and the recessed portion tend to be non-uniform since the pressed portions and the projecting portion and the recessed portion in the slots which constitute the joint portion are away from each other. Therefore, with the stator (armature) according to the related art such as that described in JP 2015-23771 A, it is difficult to improve the quality of the joint between the first-side conductor segment (first segment conductor) and the second-side conductor segment (second segment conductor) since the pressing force against the joint portion between the projecting portion and the recessed portion are non-uniform.

The present invention has been made in view of addressing the foregoing issue, and therefore has an object to provide an armature and a method of manufacturing an armature that enable improving the quality of the joint between a first segment conductor and a second segment conductor.

### Means for Solving the Problem

In order to achieve the foregoing object, a first aspect of the present invention provides an armature including: an armature core provided with a plurality of slots that extend in a center axis direction; and a coil portion that includes a plurality of segment conductors that have leg portions disposed in the armature core, and in which a first leg portion of a first segment conductor disposed on one side in the center axis direction, among the plurality of segment conductors, and a second leg portion of a second segment conductor disposed on the other side in the center axis direction are joined to each other, in which: the first leg portion includes a first facing surface which faces the second leg portion and at least a part of which directs to one side in a radial direction of the armature core, and a first other end surface that directs to the other side in the radial direction; the second leg portion includes a second facing surface which faces the first facing surface and at least a part of which directs to the other side in the radial direction, and a second other end surface that directs to the other side in the radial direction and that is continuous with the second facing surface; and at least a part of the first facing surface and at least a part of the second facing surface are joined to each other, and the first other end surface is disposed so as to project toward the other side in the radial direction with respect to the second other end surface.

In the armature according to the first aspect of the present invention, as described above, the first leg portion is provided with a first facing surface which faces the second leg portion and at least a part of which directs to one side in the radial direction of the armature core, and the second leg portion is provided with a second facing surface which faces the first facing surface and at least a part of which directs to the other side in the radial direction. Consequently, in the case where a load is applied to the first leg portion toward one side in the radial direction, the load can be received by the second facing surface of the second leg portion. In addition, in the case where a load is applied to the second leg portion toward the other side in the radial direction, the load can be received by the first facing surface of the first leg portion. As a result, at least a part of the first facing surface and at least a part of the second facing surface can be joined to each other with the first facing surface and the second facing surface pushing each other by pressing the first leg portion or the second leg portion in the radial direction. As a result, the pressing force with which the first facing surface and the second facing surface push each other (pressing force against the joint portion) can be prevented from being non-uniform unlike the case where the first leg portion or the second leg portion is indirectly pressed from the outer side (coil end portion) in the center axis direction of the armature core which is away from the joint portion. Consequently, the quality of the joint between the first segment conductor and the second segment conductor can be improved.

In addition, in the armature according to the first aspect of the present invention, as described above, the first leg portion is provided with a first other end surface that directs to the other side in the radial direction, and the second leg portion is provided with a second other end surface that directs to the other side in the radial direction and that is continuous with the second facing surface. The first other end surface is disposed so as to project toward the other side in the radial direction with respect to the second other end surface. Consequently, the pressing portion (the pressing jig or a part of the armature core) can be caused to abut against the first other end surface earlier than the second other end surface by moving the pressing portion from the other side toward one side in the radial direction when the first leg portion is pressed from the other side toward one side in the radial direction. As a result, the first leg portion can be pressed along the direction in which the first facing surface directs (one side in the radial direction).

A second aspect of the present invention provides a method of manufacturing an armature that includes an armature core provided with a plurality of slots that extend in a center axis direction and a coil portion that includes a plurality of segment conductors having leg portions disposed in the armature core, the plurality of leg portions being joined to each other, the method including: a step of disposing the plurality of segment conductors in the armature core such that at least a part of a first surface of a first leg portion of a first segment conductor, among the plurality of segment conductors, directs to one side in a radial direction of the armature core, a first other end surface of the first leg portion directs to the other side in the radial direction, at least a part of a second surface of a second leg portion of a second segment conductor, among the plurality of segment conductors, and a second other end surface which is continuous with the second surface direct to the other side in the radial direction, the first leg portion is disposed on one side in the center axis direction, and the second leg portion is disposed on the other side in the center axis direction; and a step of forming the coil portion by pressing the first segment conductor toward one side in the radial direction, by use of a pressing portion which is composed of a part of the armature core or a pressing jig, while the pressing portion contacting the first other end surface with the first other end surface disposed so as to project toward the other side in the radial direction with respect to the second other end surface, and by joining at least a part of the first surface of the first segment conductor and at least a part of the second surface of the second segment conductor to each other.

With the method of manufacturing an armature according to the second aspect of the present invention, the pressing force with which the first surface and the second surface push each other (pressing force against the joint portion) can be prevented from being non-uniform, by configuring the step of disposing the plurality of segment conductors as described above. Consequently, it is possible to provide a method of manufacturing an armature that can improve the quality of the joint between the first segment conductor and the second segment conductor. In addition, the first leg portion can be pressed with the second leg portion prevented from being pressed, by configuring the step of forming the coil portion by joining the leg portions as described above. As a result, the first leg portion can be pressed appropriately such that the first surface and the second surface push each other. Thus, it is possible to provide a method of manufacturing an armature that can further improve the quality of the joint between the first segment conductor and the second segment conductor.

### Effects of the Invention

According to the present invention, as described above, the quality of the joint between a first segment conductor and a second segment conductor can be improved.

### BRIEF DESCRIPTION OF THE DRAWINGS

[FIG. 1] FIG. 1 is a plan view illustrating the configuration of a stator (rotary electric machine) according to an embodiment.
[FIG. 2] FIG. 2 is a perspective view illustrating the configuration of the stator according to the embodiment.
[FIG. 3] FIG. 3 is an exploded perspective view of the stator according to the embodiment.
[FIG. 4] FIG. 4 is a plan view illustrating the configuration of a stator core according to the embodiment.
[FIG. 5] FIG. 5 is a sectional view illustrating the configuration of slot insulating paper according to the embodiment.
[FIG. 6] FIG. 6 is a circuit diagram illustrating the connection configuration of a coil portion according to the embodiment.
[FIG. 7] FIG. 7 is a perspective view illustrating a part of a first coil assembly according to the embodiment.
[FIG. 8] FIG. 8 is a cross-sectional view illustrating the configuration of a segment conductor according to the embodiment, in which FIG. 8A illustrates an insulating coating and FIG. 8B illustrates an insulating portion.
[FIG. 9] FIG. 9 illustrates the configuration of a general conductor according to the embodiment.
[FIG. 10] FIG. 10 illustrates the configuration of a power conductor according to the embodiment.
[FIG. 11] FIG. 11 is an enlarged view of a portion indicated by symbol E1 in FIG. 1.
[FIG. 12] FIG. 12 is a sectional view taken along the line 1000-1000 in FIG. 1.
[FIG. 13] FIG. 13 is a perspective view illustrating the configuration of a radially outer neutral point conductor according to the embodiment.
[FIG. 14] FIG. 14 is an enlarged view of a portion indicated by symbol E2 in FIG. 1.
[FIG. 15] FIG. 15 is a perspective view illustrating the configuration of a radially inner neutral point conductor according to the embodiment.
[FIG. 16] FIG. 16 is a sectional view illustrating the configuration of a first facing surface and a second facing surface according to the embodiment.
[FIG. 17] FIG. 17 is a sectional view illustrating the position of arrangement of insulating members and joint portions according to the embodiment.
[FIG. 18] FIG. 18 is a schematic view illustrating the areas of a first joint surface and a first inverse inclination surface and the areas of a second joint surface and a second inverse inclination surface according to the embodiment.
[FIG. 19] FIG. 19 is a flowchart illustrating steps of manufacturing the stator according to the embodiment.
[FIG. 20] FIG. 20 illustrates a step of disposing segment conductors in a slot according to the embodiment.
[FIG. 21] FIG. 21 is a sectional view illustrating a step of disposing slot insulating paper in slots according to the embodiment.
[FIG. 22] FIG. 22 is a sectional view, taken along the radial direction, illustrating a step of pressing segment conductors with a pressing jig and a wall portion according to the embodiment.
[FIG. 23] FIG. 23 is a sectional view, as seen in plan, illustrating the step of pressing the segment conductors with the pressing jig and the wall portion according to the embodiment.
[FIG. 24] FIG. 24 illustrates the configuration of a stator (a first facing surface and a second facing surface) according to a first modification of the embodiment.
[FIG. 25] FIG. 25 illustrates the configuration of a stator (a first facing surface and a second facing surface) according to a second modification of the embodiment.
[FIG. 26] FIG. 26 illustrates the configuration of a stator (first other end surface) according to a third modification of the embodiment.
[FIG. 27] FIG. 27 illustrates the configuration of a stator (a first facing surface and a second facing surface) according to a fourth modification of the embodiment.
[FIG. 28] FIG. 28 illustrates the configuration of a stator (coil portion) according to a fifth modification of the embodiment.
[FIG. 29] FIG. 29 illustrates the configuration of a stator according to a sixth modification of the embodiment.

### MODES FOR CARRYING OUT THE INVENTION

An embodiment of the present invention will be described below with reference to the drawings.

### [Structure of Stator]

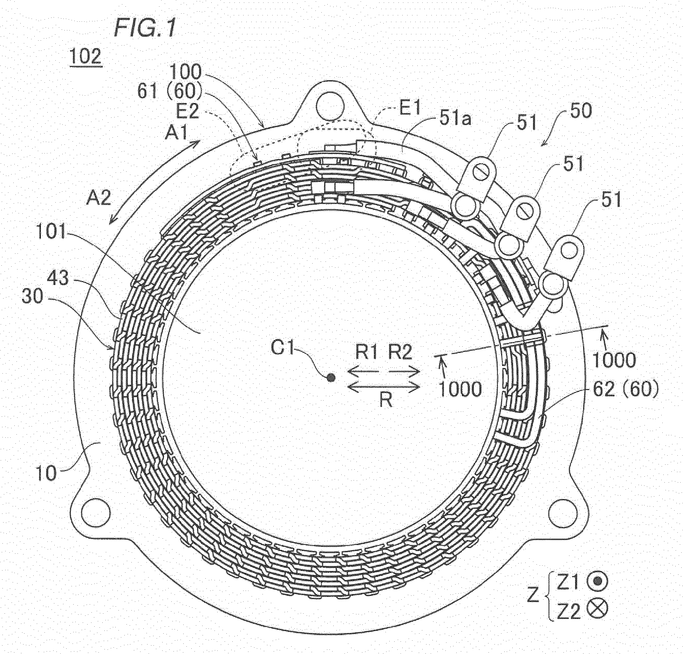

The structure of a stator 100 according to the present embodiment will be described with reference to FIGS. 1 to 16. The stator 100 has a circular ring shape centered on a center axis C1. The stator 100 is an example of the "armature" in the claims.

The term "axial direction (center axis direction)" as used herein means the direction (Z direction) along the center axis C1 (rotational axis of a rotor 101) of the stator 100 as illustrated in FIG. 1. The term "circumferential direction" means the circumferential direction (A direction) of the stator 100. The term "radial direction" means the radial direction (R direction) of the stator 100. The term "radially inner side" means the direction (R1 direction) toward the center axis C1 of the stator 100. The term "radially outer side" means the direction (R2 direction) toward the outside of the stator 100. The radially outer side is an example of the "other side in the radial direction" in the claims. The radially inner side is an example of the "one side in the radial direction" in the claims.

The stator 100 constitutes a part of a rotary electric machine together with the rotor 101. The rotary electric machine is constituted as a motor, a generator, or a motor/generator, for example. As illustrated in FIG. 1, the stator 100 is disposed on the radially outer side of the rotor 101 which is provided with a permanent magnet (not illustrated). That is, in the present embodiment, the stator 100 constitutes a part of a rotary electric machine 102 of an inner rotor type.

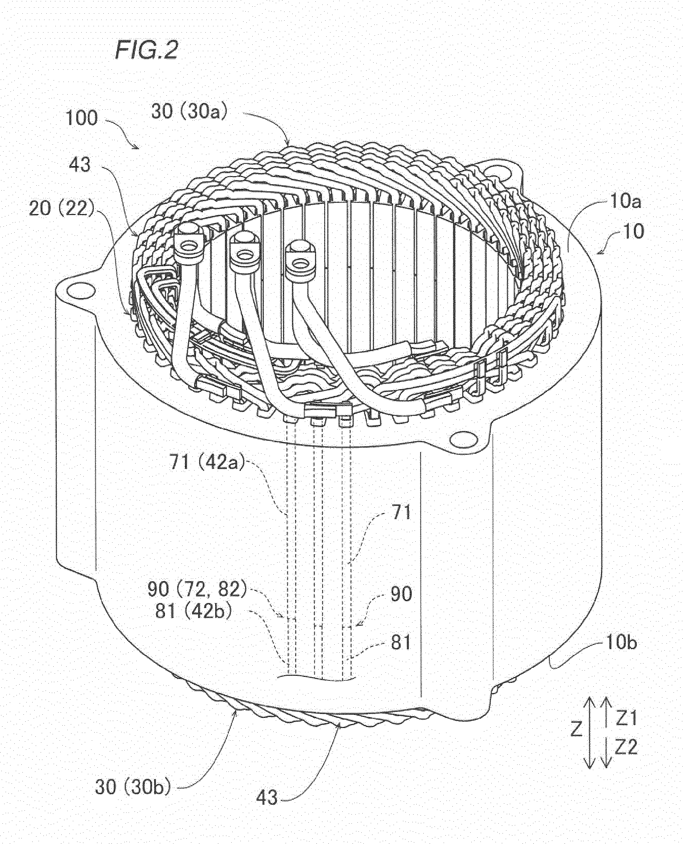

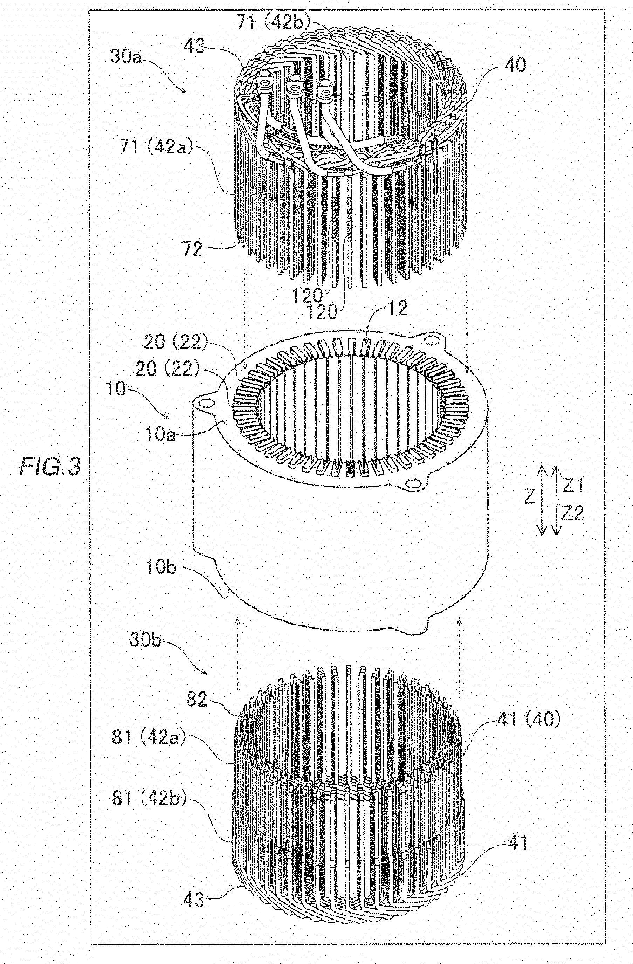

As illustrated in FIG. 2, the stator 100 includes a stator core 10, slot insulating paper 20, and a coil portion 30. As illustrated in FIG. 3, in addition, the coil portion 30 includes a first coil assembly 30a and a second coil assembly 30b. In addition, the coil portion 30 is composed of a plurality of segment conductors 40. The stator core 10 is an example of the "armature core" in the claims. In addition, the slot insulating paper 20 is an example of the "slot insulating member" in the claims.

### (Structure of Stator Core)

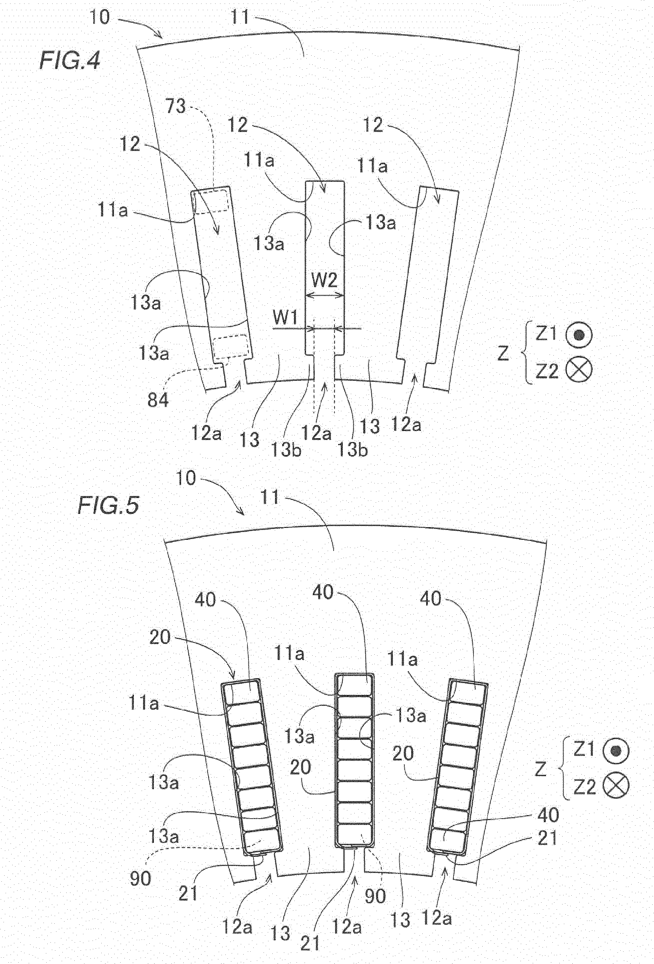

The stator core 10 has a cylindrical shape centered on the center axis C1 (see FIG. 1). In addition, the stator core 10 is formed by stacking a plurality of electromagnetic steel sheets (e.g. silicon steel sheets) in the axial direction, for example. As illustrated in FIG. 4, the stator core 10 is provided with a back yoke 11 in a circular ring shape as seen in the axial direction and a plurality of slots 12 provided on the radially inner side of the back yoke 11 to extend in the axial direction. The stator core 10 includes a plurality of teeth 13 provided on both sides of the slots 12 in the circumferential direction.

The slots 12 are each a portion surrounded by a wall portion 11a of the back yoke 11 provided on the radially outer side with respect to a first other end surface 73, to be discussed later, and respective circumferential side surfaces 13a of two teeth 13. The slots 12 are each provided with an opening portion 12a provided on the radially inner side with respect to a second one end surface 84, to be discussed later, to open on the radially inner side. In addition, the slots 12 open on both sides in the axial direction. The teeth 13 are formed so as to project toward the radially inner side from the back yoke 11, and each have a projecting portion 13b formed at the distal end portion thereof on the radially inner side to constitute the opening portions 12a of the slots 12. The wall portion 11a is an example of the "pressing portion" in the claims.

The opening portion 12a has an opening width W1 in the circumferential direction. Here, the opening width W1 corresponds to the distance between the respective distal end portions of the projecting portions of the projecting portions 13b of the teeth 13. Meanwhile, a width W2 of a portion of the slot 12 in which the coil portion 30 and the slot insulating paper 20 are disposed is larger than the opening width W1. That is, the slots 12 are constituted as semi-open slots. Here, the width W2 corresponds to the distance between the respective circumferential side surfaces 13a of the teeth 13 which are disposed on both sides of the slot 12. In addition, the width W2 of the slots 12 is generally constant over the radial direction.

### (Structure of Slot Insulating Paper)

As illustrated in FIG. 5, the slot insulating paper 20 is disposed between the teeth 13 and the segment conductors 40. Here, in the present embodiment, the slot insulating paper 20 includes a joint portion cover portion 21. The joint portion cover portion 21 is configured to cover at least the radially inner side of a joint portion 90, to be discussed later, of the segment conductor 40 disposed closest to the opening portion 12a of the slot 12, among the plurality of segment conductors 40 which are disposed in parallel in the radial direction. The slot insulating paper 20 is an example of the "slot insulating member" in the claims.

Particularly, the slot insulating paper 20 is constituted of an insulating member in a sheet shape such as aramid paper and a polymer film, for example, and has a function of securing the insulation between the segment conductors 40 (coil portion 30) and the stator core 10. The slot insulating paper 20 is disposed between the segment conductors 40 and the circumferential side surfaces 13a of the teeth 13 and between the segment conductor 40 disposed on the radially outermost side, among the plurality of segment conductors 40, and the wall portion 11a. In addition, as illustrated in FIG. 3, the slot insulating paper 20 includes collar portions 22 (cuff portions) that project axially outward from the slot 12 on both sides in the axial direction and that are folded back to be formed.

The slot insulating paper 20 is disposed so as to integrally cover the periphery of the plurality of segment conductors 40 which are disposed in parallel in the radial direction as seen in the direction of the arrow Z2. In other words, the slot insulating paper 20 covers both sides, in the circumferential direction, and both sides, in the radial direction, of slot housed portions 42a and 42b, to be discussed later, of the plurality of segment conductors 40 which are disposed in parallel in the radial direction. Consequently, the slot insulating paper 20 can secure the insulation between the joint portion 90 and the stator core 10. The slot housed portions 42a and 42b are an example of the "leg portions" in the claims.

### (Structure of Coil Portion)

As illustrated in FIGS. 2 and 3, the coil portion 30 is formed by combining, in the axial direction, and joining the first coil assembly 30a, which is provided on one axial side (side in the direction of the arrow Z1), and the second coil assembly 30b, which is provided on the other axial side (side in the direction of the arrow Z2). The first coil assembly 30a and the second coil assembly 30b are each formed in a circular ring shape about the center axis C1 (see FIG. 1) as with the stator core 10.

The coil portion 30 is constituted as a wave-wound coil, for example. In addition, the coil portion 30 is constituted as an eight-turn coil, for example. That is, as illustrated in FIG. 5, the coil portion 30 is constituted with eight segment conductors 40 disposed in parallel in the radial direction in each slot 12. The coil portion 30 is supplied with three-phase AC power from a power source portion (not illustrated) so as to generate magnetic flux with a current flowing one way and the other in the axial direction and with a current flowing in the circumferential direction.

### <Configuration of Connection of Coil Portion>

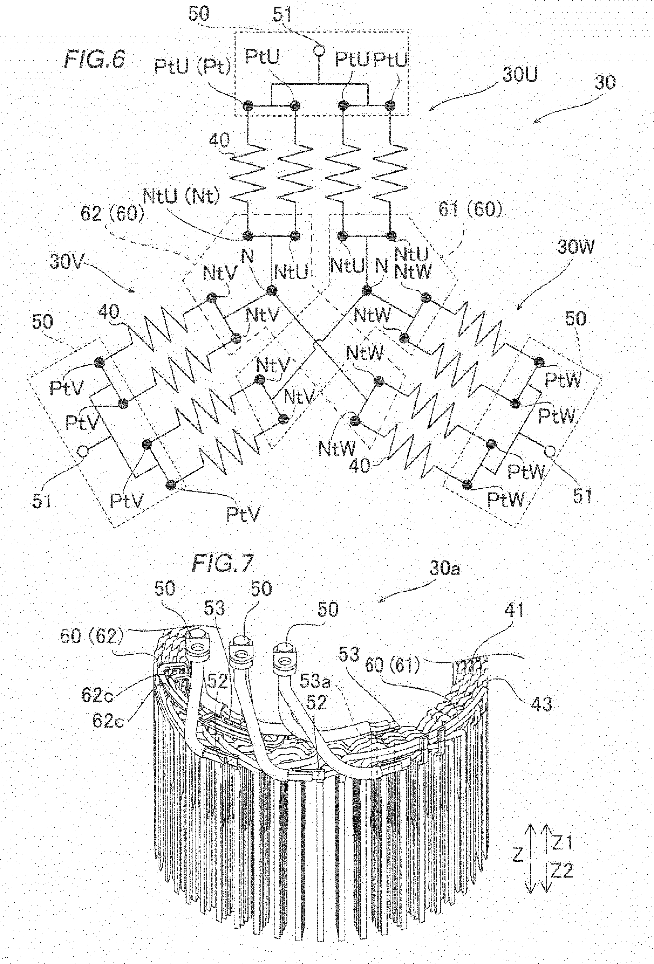

As illustrated in FIG. 6, the coil portion 30 is connected through a Y connection of three phases. That is, the coil portion 30 includes a U-phase coil portion 30U, a V-phase coil portion 30V, and a W-phase coil portion 30W. For example, the coil portion 30 is provided with a plurality of neutral points N. Particularly, the coil portion 30 is connected through a four-parallel connection (star connection). That is, the U-phase coil portion 30U is provided with four neutral point connection end portions NtU and four power line connection end portions PtU. The V-phase coil portion 30V is provided with four neutral point connection end portions NtV and four power line connection end portions PtV. The W-phase coil portion 30W is provided with four neutral point connection end portions NtW and four power line connection end portions PtW. In the following description, the neutral point connection end portions and the power line connection end portions will be referred to simply as "neutral point connection end portions Nt" and "power line connection end portions Pt" in the case where U-phase, V-phase, and W-phase are not specifically differentiated from each other.

### <Structure of Coil Assembly>

As illustrated in FIG. 7, the first coil assembly 30a includes: a plurality of (e.g. three) power line connection segment conductors 50 (hereinafter referred to as "power conductors 50") that serve as the segment conductors 40; a plurality of (e.g. two) neutral point connection segment conductors 60 (hereinafter referred to as "neutral point conductors 60") that serve as the segment conductors 40; and a plurality of general conductors 41 that are conductors (general segment conductors 40) that are different from the power conductors 50 and the neutral point conductors 60, among the plurality of segment conductors 40, and that constitute the coil portion 30.

As illustrated in FIG. 3, the second coil assembly 30b is constituted from a plurality of general conductors 41. Preferably, the second coil assembly 30b is constituted from only the plurality of general conductors 41, and all the power conductors 50 and the neutral point conductors 60 are provided in the stator 100 provided in the first coil assembly 30a.

### (Structure of Segment Conductors)

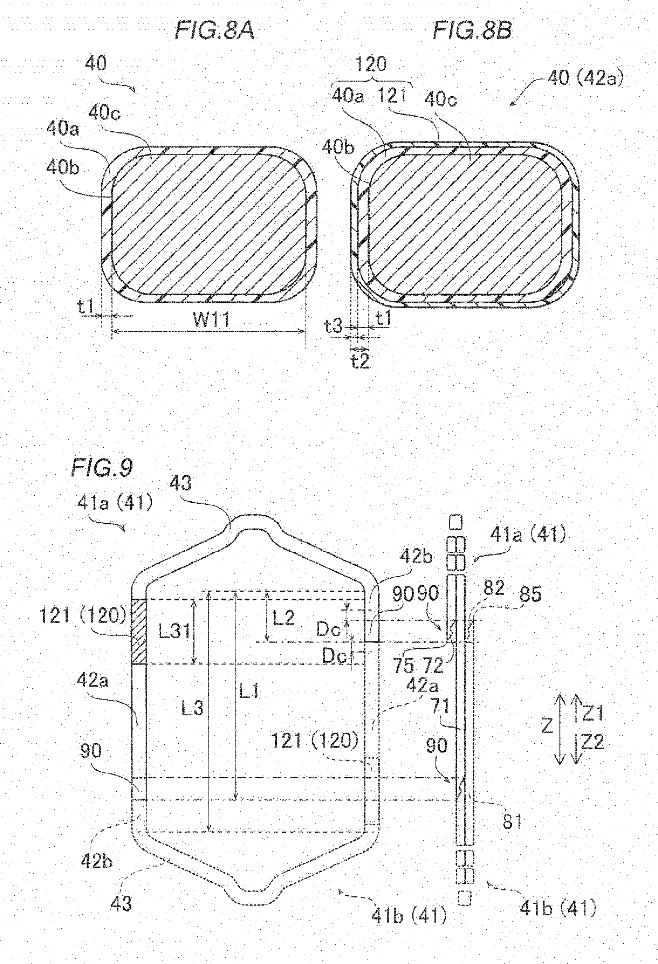

As illustrated in FIG. 8A, the segment conductor 40 is constituted as a rectangular conductive wire which has a generally rectangular cross-sectional surface. An insulating coating 40a which has a thickness t1 is provided on a conductor surface 40b of the segment conductor 40. The thickness t1 of the insulating coating 40a is set to such a level that enables securing the inter-phase insulation performance (insulation between coil end portions 43), for example. Particularly, the insulating coating 40a is constituted of a coating agent such as polyimide. Meanwhile, a conductor body 40c of the segment conductor 40 is constituted of a metal material (conductive material) such as copper or aluminum, for example. While FIG. 8 illustrates components with size relationship such as thickness thereof exaggerated for illustration, the present invention is not limited thereto.

As illustrated in FIG. 2, the segment conductor 40 includes the slot housed portions 42a and 42b to be disposed in the slots 12 and the coil end portions 43. The slot housed portions 42a and 42b mean portions to be disposed in the slots 12 from the axial position of an end surface 10a or 10b of the stator core 10. The coil end portion 43 means a portion formed to be continuous with the slot housed portions 42a and 42b and disposed on the axially outer side with respect to the end surface 10a or 10b of the stator core 10. In addition, the coil end portion 43 has an offset portion shaped to be bent in the axial direction and offset in the radial direction at the bent portion.

### <Structure of General Conductors>

As illustrated in FIG. 9, the general conductor 41 includes a pair of slot housed portions 42a and 42b to be disposed in different slots 12 and a coil end portion 43 that connects between the pair of slot housed portions 42a and 42b. Consequently, the general conductor 41 has a generally U-shape or a generally J-shape as seen from the radially inner side. The slot housed portions 42a and 42b are formed to be straight along the axial direction. The slot housed portions 42a and 42b of the power conductors 50 and the slot housed portions 42a and 42b of the neutral point conductors 60 are configured similarly to the slot housed portions 42a and 42b of the general conductors 41, and therefore are not described.

Here, the coil pitch of the general conductor 41 is six. That is, the pair of slot housed portions 42a and 42b are disposed at positions six slots 12 away from each other in the circumferential direction. That is, five slots are provided between the slot 12 in which the slot housed portion 42a of the general conductor 41 is disposed and the slot 12 in which the slot housed portion 42b is disposed.

In addition, the pair of slot housed portions 42a and 42b have different axial lengths. Specifically, an axial length L1 of the slot housed portion 42a is longer than an axial length L2 of the slot housed portion 42b. The axial length L1 (L2) of the slot housed portion 42a (42b) means the length from a distal end 75 (85) to the axial position corresponding to the axial end surface 10a (10b) of the stator core 10. In addition, the axial lengths L1 and L2 are smaller than an axial length L3 of the stator core 10. The axial length L3 of the stator core 10 means the distance (interval) between the axial end surfaces 10a and 10b. For example, the axial length L1 is longer than half the axial length L3, and the axial length L2 is shorter than half the axial length L3.

In addition, the plurality of general conductors 41 include first general conductors 41a disposed on one axial side (side in the direction of the arrow Z1) with respect to the stator core 10 and included in the first coil assembly 30a, and second general conductors 41b disposed on the other axial side (side in the direction of the arrow Z2) with respect to the stator core 10 and included in the second coil assembly 30b.

### <Structure of Power Conductors>

In the power conductor 50, as illustrated in FIG. 6, a plurality of (e.g. four) power line connection end portions Pt for the same phase are electrically connected to each other, and the plurality of power line connection end portions Pt which are connected to each other and a power terminal member 51 are electrically connected to each other. The power conductors 50 have a function of introducing power from a power source portion (not illustrated) to the coil portion 30.

Particularly, as illustrated in FIG. 7, the power conductor 50 includes a radially outer power conductor 52 to be disposed on the axially outer side of the stator core 10 and a radially inner power conductor 53 to be disposed on the radially inner side. In other words, the power conductor 50 is formed in a bifurcated shape.

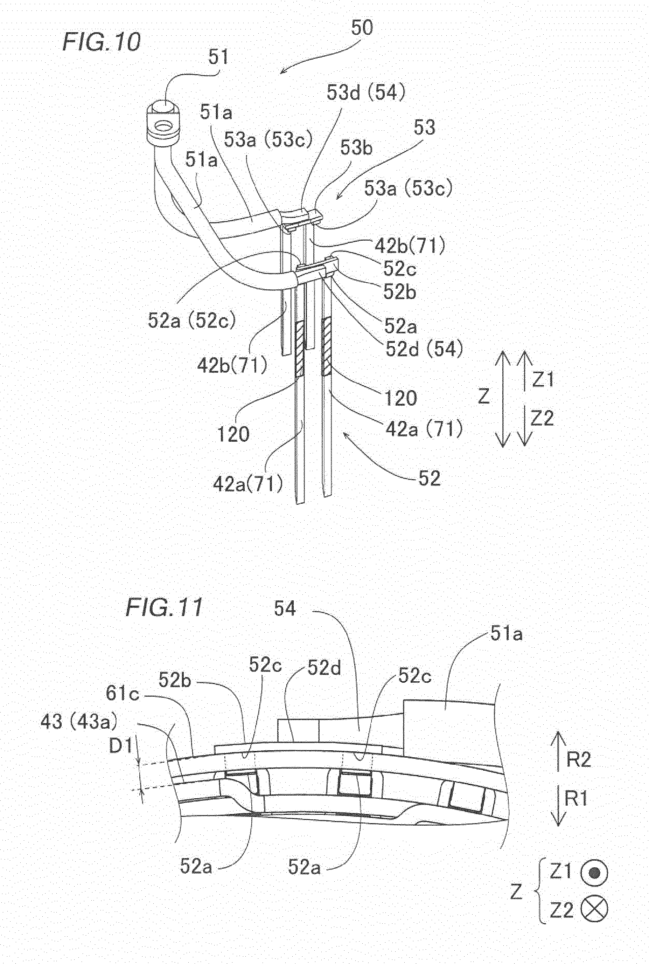

Here, in the present embodiment, as illustrated in FIG. 10, the radially outer power conductor 52 and the power terminal member 51 are electrically connected to each other by a lead wire 54. In addition, the radially inner power conductor 53 and the power terminal member 51 are electrically connected to each other by a lead wire 54. The radially outer power conductor 52 and the radially inner power conductor 53 are electrically connected to each other via the power terminal member 51 and the lead wires 54. In addition, the lead wires 54 are formed from a stranded wire (conductor), for example, with an insulating tube 51a disposed at the outer periphery thereof.

The radially outer power conductor 52 includes two slot housed portions 42a, two power line coil end portions 52a that constitute two power line connection end portions Pt and that are led out from the slot housed portions 42a in the axial direction, and a conductor plate 52b joined to the two power line coil end portions 52a to be electrically connected thereto. For example, the conductor plate 52b is joined to the radially outer side of the two power line coil end portions 52a, and the lead wire 54 is joined to the radially outer side of the conductor plate 52b.

The two power line coil end portions 52a and the conductor plate 52b are connected to each other by being welded at welded portions 52c. In addition, the conductor plate 52b and the lead wire 54 are connected to each other by being brazed or welded at a joint portion 52d. For example, the welding is implemented through any of resistance welding, arc welding, laser welding, and high-energy beam welding.

Here, as illustrated in FIG. 11, a spacing D1 in the radial direction between the welded portion 52c and the joint portion 52d (conductor plate 52b) and an end surface 43a, on the radially outer side, of the coil end portion 43 of the general conductor 41 is equal to or less than twice a width W11 of the cross-sectional surface (see FIG. 8) of the segment conductor 40 (preferably equal to or less than the width W11). For example, no welding tool space is provided between the welded portion 52c and the joint portion 52d and the coil end portion 43.

As illustrated in FIG. 10, the radially inner power conductor 53 includes two slot housed portions 42b, two power line coil end portions 53a that constitute two power line connection end portions Pt and that are led out from the slot housed portions 42b in the axial direction, and a conductor plate 53b joined to the two power line coil end portions 53a to be electrically connected thereto. For example, the conductor plate 53b is joined to the axially outer side (side in the direction of the arrow Z1) of the two power line coil end portions 53a, and the lead wire 54 is joined to the axially outer side (side in the direction of the arrow Z1) of the conductor plate 53b.

The two power line coil end portions 53a and the conductor plate 53b are connected to each other by being welded at welded portions 53c. In addition, the conductor plate 53b and the lead wire 54 are connected to each other by being welded at a welded portion 53d. Here, a spacing D2 in the axial direction between the welded portions 53c and 53d (conductor plate 53b) and an end surface 43b, on one axial side, of the coil end portion 43 of the general conductor 41 is equal to or less than twice the width W11 of the cross-sectional surface (see FIG. 8) of the segment conductor 40 (preferably equal to or less than the width W11).

The slot pitch of the radially outer power conductor 52 is one for a portion formed from the slot housed portions 42a and the conductor plate 52b, and zero if only the slot housed portions 42a are considered as the segment conductors 40. Meanwhile, the slot pitch of the radially inner power conductor 53 is one for a portion formed from the slot housed portions 42b and the conductor plate 53b, and zero if only the slot housed portions 42b are considered as the segment conductors 40. That is, the slot pitch of the power conductor 50 is different from the slot pitch (6) of the general conductor 41.

### <Structure of Neutral Point Conductors>

As illustrated in FIG. 7, the neutral point conductors 60 include a radially outer neutral point conductor 61 and a radially inner neutral point conductor 62. As illustrated in FIG. 6, the radially outer neutral point conductor 61 and the radially inner neutral point conductor 62 each include a neutral point N, at which the neutral point connection end portions NtU of the U-phase coil portion 30U, the neutral point connection end portions NtV of the V-phase coil portion 30V, and the neutral point connection end portions NtW of the W-phase coil portion 30W are electrically connected to each other.

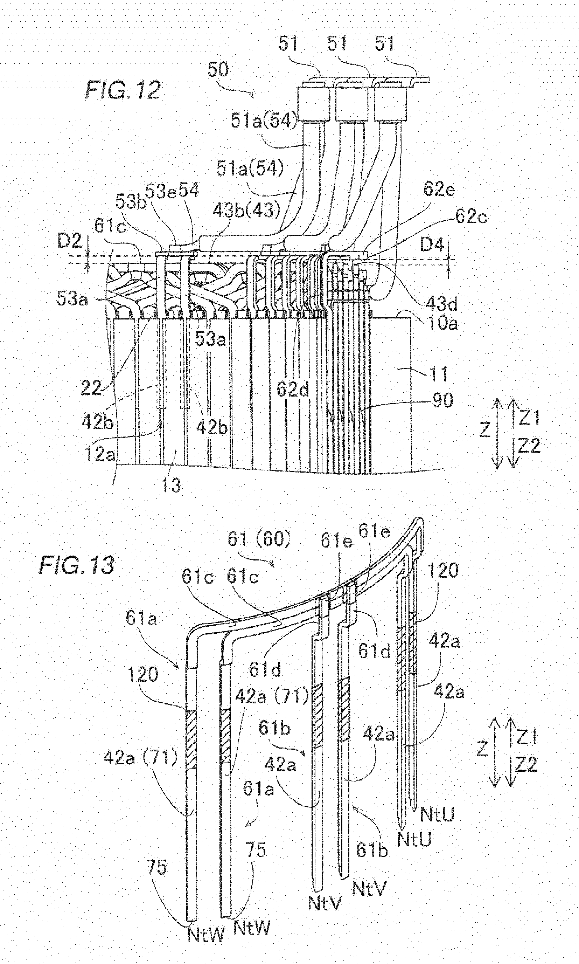

As illustrated in FIG. 13, the radially outer neutral point conductor 61 includes two U-phase/W-phase neutral point segment conductors 61a and two V-phase neutral point segment conductors 61b. The U-phase/W-phase neutral point segment conductors 61a each include a slot housed portion 42a for U-phase to be connected to the general conductor 41 for U-phase of three-phase AC, a slot housed portion 42a for W-phase to be connected to the general conductor 41 for W-phase, and two neutral point coil end portions 61c that each connect between the slot housed portion 42a for U-phase and the slot housed portion 42a for W-phase. The neutral point coil end portions 61c are each formed to be continuous with the slot housed portion 42a for U-phase, and formed to be continuous with the slot housed portion 42a for W-phase.

The U-phase/W-phase neutral point segment conductors 61a are each formed in a generally U-shape (generally C-shape) as seen from the radially inner side. The V-phase neutral point segment conductors 61b are each formed in a generally straight shape as seen from the radially inner side.

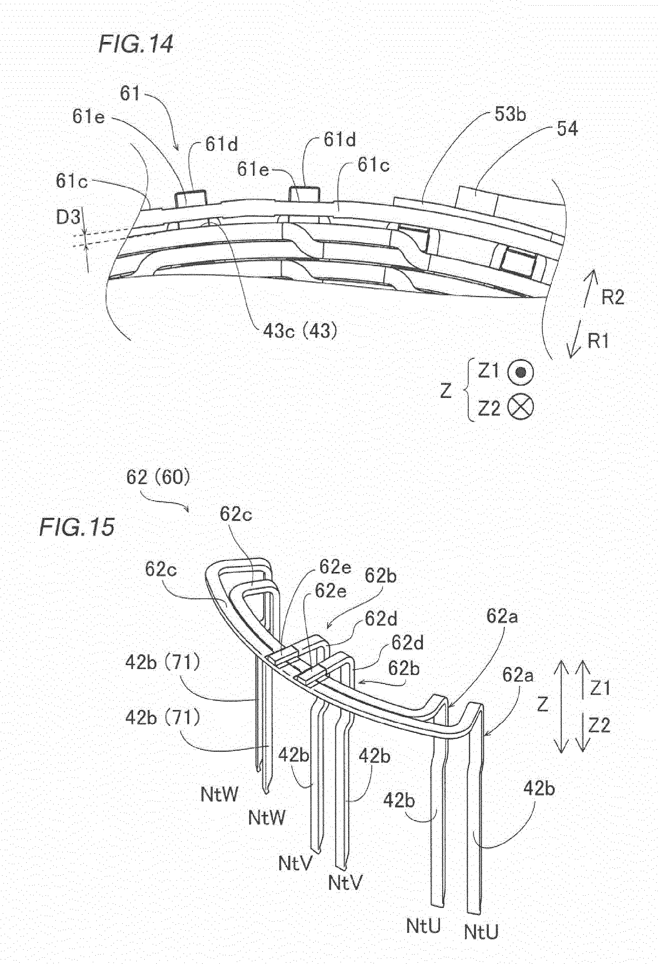

As illustrated in FIG. 14, the neutral point coil end portions 61c are formed along the circumferential direction on the radially outer side of the coil end portion 43 of the general conductor 41. The neutral point coil end portions 61c are formed in a generally arcuate shape as seen in the direction of the arrow Z2.

In addition, the slot pitch of one of the two U-phase/W-phase neutral point segment conductors 61a is nine. Meanwhile, the slot pitch of the other of the two U-phase/W-phase neutral point segment conductors 61a is seven. That is, the U-phase/W-phase neutral point segment conductors 61a have a slot pitch that is different from the slot pitch (6) of the general conductor 41. One of the two U-phase/W-phase neutral point segment conductors 61a is disposed on the axially outer side (side in the direction of the arrow Z1) of the other.

As illustrated in FIG. 13, the V-phase neutral point segment conductors 61b each include a slot housed portion 42a for V-phase to be connected to the general conductor 41 for V-phase and a neutral point coil end portion 61d. The neutral point coil end portion 61d is formed so as to project toward the axially outer side (in the direction of the arrow Z1) from the slot housed portion 42a. Each of the two neutral point coil end portions 61d is joined to the two neutral point coil end portions 61c to be electrically joined thereto.

Specifically, as illustrated in FIG. 14, the two neutral point coil end portions 61d are welded at welded portions 61e to the radially outer side of the two neutral point coil end portions 61c in an arcuate shape. Consequently, in the radially outer neutral point conductor 61, the neutral point connection end portions NtU of the U-phase coil portion 30U, the neutral point connection end portions NtV of the V-phase coil portion 30V, and the neutral point connection end portions NtW of the W-phase coil portion 30W are electrically connected to each other. A spacing D3 between the welded portions 61e (an end surface of the neutral point coil end portions 61c on the radially inner side) and an end surface 43c, on the radially outer side, of the coil end portion 43 of the general conductor 41 is equal to or less than twice the width W11, along the radial direction, of the cross-sectional surface of the segment conductor 40 (preferably equal to or less than the width W11).

As illustrated in FIG. 15, the radially inner neutral point conductor 62 includes two U-phase/W-phase neutral point segment conductors 62a and two V-phase neutral point segment conductors 62b. The U-phase/W-phase neutral point segment conductors 62a each include a slot housed portion 42b for U-phase to be connected to the general conductor 41 for U-phase of three-phase AC, a slot housed portion 42b for W-phase to be connected to the general conductor 41 for W-phase, and a neutral point coil end portion 62c that connects between the slot housed portion 42b for U-phase and the slot housed portion 42b for W-phase. The neutral point coil end portions 62c are each formed to be continuous with the slot housed portion 42b for U-phase, and formed to be continuous with the slot housed portion 42b for W-phase.

The U-phase/W-phase neutral point segment conductors 62a are each formed in a generally U-shape (generally C-shape) as seen from the radially inner side. The V-phase neutral point segment conductors 62b are each formed in a generally straight shape as seen from the radially inner side.

As illustrated in FIG. 7, the neutral point coil end portions 62c are formed on the radially inner side of the coil end portion 43 of the general conductor 41 to project toward the axially outer side with respect to the coil end portion 43 of the general conductor 41. The neutral point coil end portions 62c are disposed in proximity to the axially outer side of the coil end portion 43 of the general conductor 41, and formed along the circumferential direction as seen in the axial direction.

In addition, the slot pitch of one of the two U-phase/W-phase neutral point segment conductors 62a is nine. Meanwhile, the slot pitch of the other of the two U-phase/W-phase neutral point segment conductors 62a is seven. That is, the U-phase/W-phase neutral point segment conductors 62a have a slot pitch that is different from the slot pitch (6) of the general conductor 41. One of the two U-phase/W-phase neutral point segment conductors 62a is disposed on the radially outer side of the other.

The V-phase neutral point segment conductors 62b each include a slot housed portion 42b for V-phase to be connected to the general conductor 41 for V-phase and a neutral point coil end portion 62d. The neutral point coil end portion 62d is formed so as to project toward the axially outer side (in the direction of the arrow Z1) from the slot housed portion 42b. Each of the two neutral point coil end portions 62d is joined to the two neutral point coil end portions 62c to be electrically joined thereto.

Specifically, as illustrated in FIG. 15, the two neutral point coil end portions 62d are welded at welded portions 62e to the axially outer side of the two neutral point coil end portions 62c in an arcuate shape. Consequently, in the radially inner neutral point conductor 62, the neutral point connection end portions NtU of the U-phase coil portion 30U, the neutral point connection end portions NtV of the V-phase coil portion 30V, and the neutral point connection end portions NtW of the W-phase coil portion 30W are electrically connected to each other. As illustrated in FIG. 12, a spacing D4 between the welded portions 62e (an end surface of the neutral point coil end portions 62d on the axially inner side) and an end surface 43d, on the axially outer side, of the coil end portion 43 of the general conductor 41 is equal to or less than twice the width W11, along the radial direction, of the cross-sectional surface of the segment conductor 40 (preferably equal to or less than the width W11).

### (Configuration of Joint Portions)

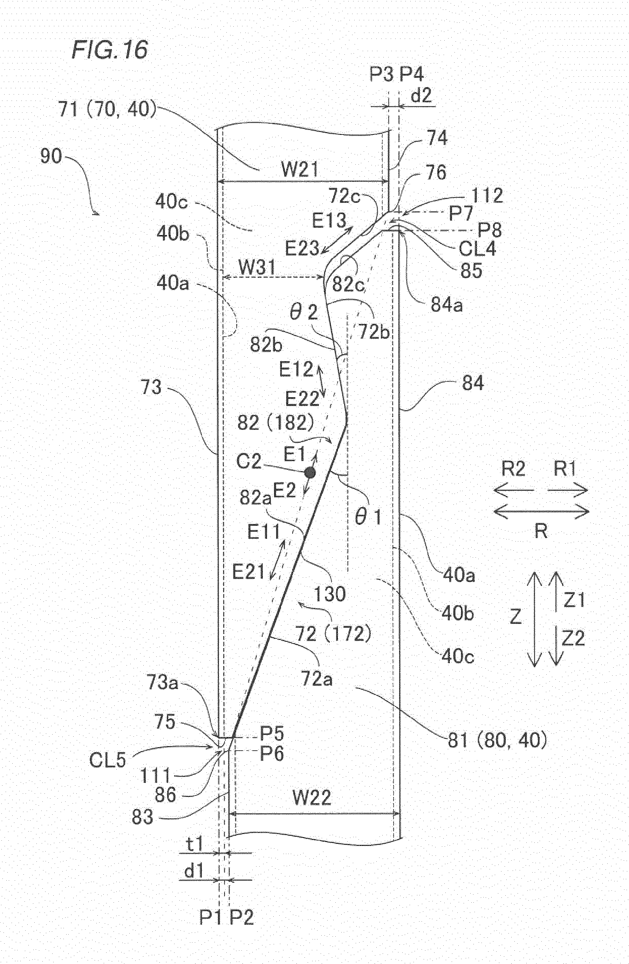

Here, in the present embodiment, as illustrated in FIG. 16, a first slot housed portion 71 which is the slot housed portion 42a or 42b of a first segment conductor 70 which is the segment conductor 40 which constitutes the first coil assembly 30a, among the plurality of segment conductors 40, and a second slot housed portion 81 which is the slot housed portion 42a or 42b of a second segment conductor 80 which is the segment conductor 40 which constitutes the second coil assembly 30b and which faces the first segment conductor 70 in the axial direction are joined to each other at the joint portion 90 in the slot 12 of the stator core 10. The first slot housed portion 71 is an example of the "first leg portion" in the claims. In addition, the second slot housed portion 81 is an example of the "second leg portion" in the claims.

In the present embodiment, the first slot housed portion 71 includes a first facing surface 72 that directs to the radially inner side (side in the direction of the arrow R1) and that faces the second slot housed portion 81 and a first other end surface 73 that faces the radially outer side (side in the direction of the arrow R2). Meanwhile, the second slot housed portion 81 includes a second facing surface 82 that directs to the radially outer side and that faces the first facing surface 72 and a second other end surface 83 that directs to the radially outer side and that is continuous with the second facing surface 82. At least a part of the first facing surface 72 and at least a part of the second facing surface 82 are joined to each other, and the first other end surface 73 is disposed so as to project toward the radially outer side with respect to the second other end surface 83. The first other end surface 73 is an end surface of the first slot housed portion 71 on the R2 side that extends in the Z direction. The second other end surface 83 is an end surface of the second slot housed portion 81 on the R2 side that extends in the Z direction. A first one end surface 74 is an end surface of the first slot housed portion 71 on the R1 side that extends in the Z direction. The second one end surface 84 is an end surface of the second slot housed portion 81 on the R1 side that extends in the Z direction.

In addition, the first slot housed portion 71 includes a first one end surface 74 that is provided on the opposite side, in the radial direction, of the first other end surface 73 and that is continuous with the first facing surface 72. The second slot housed portion 81 includes a second one end surface 84 that is provided on the opposite side, in the radial direction, of the second other end surface 83 and that directs to the radially inner side. The second one end surface 84 is disposed so as to project toward the radially inner side with respect to the first one end surface 74.

Here, the joint portion 90 is a portion of the coil portion 30 illustrated in FIG. 16, includes the first facing surface 72 and the second facing surface 82, and includes a portion of the first slot housed portion 71 from the distal end 75 to a boundary point 76 between the first facing surface 72 and the first one end surface 74 and a portion of the second slot housed portion 81 from the distal end 85 to a boundary point 86 between the second facing surface 82 and the second other end surface 83. In addition, a distal end portion 73a of the first other end surface 73 on the side in the Z2 direction and the boundary point 86 which is the distal end portion of the second other end surface 83 on the side in the Z1 direction are disposed with a clearance CL5 therebetween in the Z direction. In addition, the boundary point 76 which is the distal end portion of the first one end surface 74 on the side in the Z2 direction and a distal end portion 84a of the second one end surface 84 on the side in the Z1 direction are disposed with a clearance CL4 therebetween in the Z direction. That is, an axial position P5 of the distal end portion 73a is provided on the side in the Z1 direction with respect to an axial position P6 of the boundary point 86, and an axial position P7 of the boundary point 76 is provided on the side in the Z1 direction with respect to an axial position P8 of the distal end portion 84a.

In the present embodiment, a second stepped portion 111 is formed between the distal end 75 of the first slot housed portion 71 and the boundary point 86 of the second slot housed portion 81, which is the boundary portion between the first other end surface 73 and the second other end surface 83. Meanwhile, a first stepped portion 112 is formed between the boundary point 76 of the first slot housed portion 71 and the distal end 85 of the second slot housed portion 81, which is the boundary portion between the first one end surface 74 and the second one end surface 84. Specifically, in the second stepped portion 111 a step is formed to be dented inward of the segment conductor 40 from the first other end surface 73 toward the second other end surface 83. Meanwhile, in the first stepped portion 112 a step is formed to be dented inward of the segment conductor 40 from the second one end surface 84 toward the first one end surface 74. In the second stepped portion 111, in addition, the distal end portion 73a of the first other end surface 73 on the side in the Z2 direction is shaped to project toward the side in the R2 direction with respect to the boundary point 86 (distal end portion) of the second other end surface 83 on the side in the Z1 direction. In the first stepped portion 112, meanwhile, the distal end portion 84a of the second one end surface 84 on the side in the Z1 direction is shaped to project toward the side in the R1 direction with respect to the boundary point 76 of the first one end surface 74 on the side in the Z2 direction.

In addition, a first deviation width d1 which is the width of the deviation between a radial position P1 of the first other end surface 73 and a radial position P2 of the second other end surface 83 is larger than the thickness t1 of the insulating coating 40a of the segment conductor 40, for example. The first deviation width d1 corresponds to the height of the step of the second stepped portion 111.

Particularly, the first deviation width d1 is set to such a level that the segment conductor 40 is not pressed in the direction of moving the first facing surface 72 and the second facing surface 82 away from each other, or to such a level that a pressing force is reduced, when the first slot housed portion 71 or the second slot housed portion 81 is pressed by a pressing jig 200, to be discussed later, and the wall portion 11a, even in the case where the first slot housed portion 71 or the second slot housed portion 81 is elastically deformed. The pressing jig 200 is an example of the "pressing portion" in the claims.

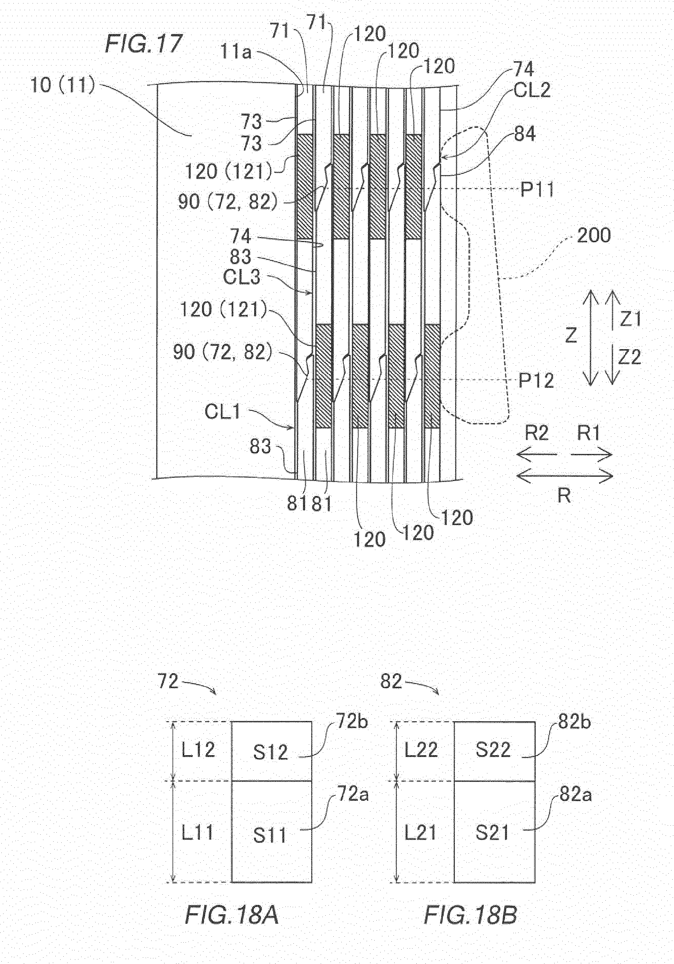

For example, as illustrated in FIG. 17, a clearance CL1 is formed in the radial direction between the wall portion 11a and the second other end surface 83 of the second slot housed portion 81 disposed on the radially outermost side. Meanwhile, a clearance CL2 is formed in the radial direction between the pressing jig 200 and the first one end surface 74 of the first slot housed portion 71 disposed on the radially innermost side during manufacture of the stator 100.

In the present embodiment, in addition, as illustrated in FIG. 16, the first deviation width d1 is equal to a second deviation width d2 which is the width of the deviation between a radial position P3 of the first one end surface 74 and a radial position P4 of the second one end surface 84 (height of the step of the first stepped portion 112). That is, a width W21, in the radial direction, of the first slot housed portion 71 is generally equal to a width W22, in the radial direction, of the second slot housed portion 81. In addition, the first slot housed portion 71 is disposed as displaced toward the radially outer side with respect to the second slot housed portion 81.

As illustrated in FIG. 17, a plurality of (e.g. eight) first slot housed portions 71 and second slot housed portions 81 are disposed adjacent to each other in the radial direction in the slot 12. That is, the plurality of first slot housed portions 71 are disposed in parallel in the radial direction, and the plurality of second slot housed portions 81 are disposed in parallel in the radial direction.

In the slot 12, the first facing surface 72 (joint portion 90) of one first slot housed portion 71, among the plurality of first slot housed portions 71, is disposed at a different position in the center axis direction from a different first facing surface 72 (joint portion 90) that is adjacent in the radial direction. In the slot 12, in addition, the second facing surface 82 of one second slot housed portion 81, among the plurality of second slot housed portions 81, is disposed at a different position in the center axis direction from a different second facing surface 82 that is adjacent in the radial direction. That is, in the present embodiment, an axial position P11 of the joint portion 90 which is constituted from the first facing surface 72 and the second facing surface 82 is different from an axial position P12 of the joint portion 90 which is constituted from a different first facing surface 72 and a different second facing surface 82 that are adjacent in the radial direction. The first facing surface 72 is an example of the "first surface" and the "first inclined surface" in the claims. In addition, the second facing surface 82 is an example of the "second surface" and the "second inclined surface" in the claims.

In other words, the first slot housed portions 71 and the second slot housed portions 81 are disposed in a staggered manner along the radial direction at the axial positions P11 and P12. The first other end surface 73 is disposed (offset) so as to project toward the radially outer side with respect to the corresponding second other end surface 83 at each of the plurality of joint portions 90. In addition, the second one end surface 84 is disposed (offset) so as to project toward the radially inner side with respect to the corresponding first one end surface 74 at each of the plurality of joint portions 90. Consequently, a clearance CL3 in the radial direction is formed between the first one end surface 74 and the second other end surface 83 in the radial direction.

### <Configuration of First Facing Surface and Second Facing Surface>

Here, in the present embodiment, as illustrated in FIG. 16, the first facing surface 72 of the first slot housed portion 71 and the second facing surface 82 of the second slot housed portion 81 are formed so as to be inclined with respect to the axial direction. Specifically, the first facing surface 72 is constituted as an end surface inclined with respect to the axial direction from the distal end 75 of the first slot housed portion 71 in the direction of the arrow E1. In addition, the first facing surface 72 is not provided with the insulating coating 40a. The second facing surface 82 is constituted as an end surface inclined from the distal end 85 of the second slot housed portion 81 in the direction of the arrow E2. In addition, the second facing surface 82 is not provided with the insulating coating 40a. The direction of the arrow E1 means a direction from the distal end 75 toward the boundary point 76 between the first facing surface 72 and the first one end surface 74. The direction of the arrow E2 means a direction from the distal end 85 toward the boundary point 86 between the second facing surface 82 and the second other end surface 83.

The first facing surface 72 and the second facing surface 82 are each formed such that the sectional surface thereof taken along the radial direction has an S-shape. In other words, the first facing surface 72 is formed into a recessed and projected shape to be recessed and projected in the radial direction, and the second facing surface 82 is formed into a recessed and projected shape, corresponding to the recessed and projected shape of the first facing surface 72, to be recessed and projected in the radial direction. The first facing surface 72 which has an S-shape (recessed and projected shape) and the second facing surface 82 which has an S-shape (recessed and projected shape) are disposed in the slot 12 with the first facing surface 72 and the second facing surface 82 engaged with each other in the radial direction.

Here, in the present embodiment, a part of the first facing surface 72 and a part of the second facing surface 82 are joined to each other using a joint material 130. Particularly, the first facing surface 72 includes a first joint surface 72a to be joined to the second facing surface 82 and a first inverse inclination surface 72b formed to be continuous with the first joint surface 72a and inclined in the direction (direction of the arrow E12) which is opposite to the direction (direction of the arrow E11) in which the first joint surface 72a is inclined with respect to the axial direction (axis that is parallel to the center axis C1). In addition, the first joint surface 72a and the first inverse inclination surface 72b are each formed as a generally flat surface, and the first joint surface 72a and the first inverse inclination surface 72b form a bent shape. In addition, the second facing surface 82 includes a second joint surface 82a to be joined to the first joint surface 72a and a second inverse inclination surface 82b formed to be continuous with the second joint surface 82a and inclined in the direction (direction of the arrow E22) which is opposite to the direction (direction of the arrow E21) in which the second joint surface 82a is inclined with respect to the axial direction.

The joint material 130 is disposed between the first joint surface 72a and the second joint surface 82a, and joins the first joint surface 72a and the second joint surface 82a to be electrically connected to each other. Specifically, the joint material 130 contains a conductive material such as silver or copper. Preferably, the joint material 130 is a joint material (silver nano paste) in a paste form in which a solvent contains conductive particles which are metal particles obtained by making silver finer to the nanometer level. In addition, the joint material 130 contains a member (resin member) to be volatilized when heated, and has a function of bringing the first joint surface 72a and the second joint surface 82a closer to each other with the volume of the joint material 130 decreased when the member to be volatilized is heated.

In the present embodiment, an inclination angle θ2 of the first inverse inclination surface 72b and the second inverse inclination surface 82b with respect to the axial direction is smaller than an inclination angle θ1 of the first joint surface 72a and the second joint surface 82a with respect to the axial direction. Consequently, it is possible to prevent a minimum width W31, in the radial direction, of the first slot housed portion 71 on the root side (side in the direction of the arrow Z1) with respect to the first joint surface 72a from being small.

In addition, as illustrated in FIG. 18, an area S11 of the first joint surface 72a is larger than an area S12 of the first inverse inclination surface 72b, and an area S21 of the second joint surface 82a is larger than an area S22 of the second inverse inclination surface 82b. That is, a length L11 of the first joint surface 72a along the direction of the arrow E11 is longer than a length L12 of the first inverse inclination surface 72b along the direction of the arrow E12, and a length L21 of the second joint surface 82a along the direction of the arrow E21 is longer than a length L22 of the second inverse inclination surface 82b along the direction of the arrow E21.

As illustrated in FIG. 16, the first facing surface 72 includes a first spaced facing surface 72c formed to be continuous with the first inverse inclination surface 72b on the opposite side from the first joint surface 72a and disposed as spaced from the second facing surface 82. In addition, the second facing surface 82 includes a second spaced facing surface 82c formed to be continuous with the second inverse inclination surface 82b on the opposite side from the second joint surface 82a and disposed as spaced from the first facing surface 72.

Particularly, the first spaced facing surface 72c is inclined in the direction of the arrow E13 which is opposite to the first inverse inclination surface 72b with respect to the axial direction (axis that is parallel to the center axis C1). In addition, the first spaced facing surface 72c is smoothly connected to the first inverse inclination surface 72b with the connection portion formed in an arcuate shape (round shape). The second spaced facing surface 82c is disposed to face the first spaced facing surface 72c, and a clearance CL4 is provided between the first spaced facing surface 72c and the second spaced facing surface 82c.

In addition, the first facing surface 72 and the second facing surface 82 are each formed such that the sectional surface thereof taken along the radial direction has an asymmetrical shape with respect to a center point C2 of the first facing surface 72. Specifically, the first facing surface 72 and the second facing surface 82 are configured such that, in the case where the center point C2 is defined as the middle point between the distal end 75 and the boundary point 76 and the first facing surface 72 is rotated by 180 degrees about the center point C2, the shape of the first facing surface 72 which has been rotated and the shape of the second facing surface 82 do not coincide with each other. Particularly, an asymmetrical shape is achieved since the first facing surface 72 includes the first joint surface 72a, the first inverse inclination surface 72b, and the first spaced facing surface 72c which are provided in this order from the distal end 75 of the first slot housed portion 71, while the second facing surface 82 includes the second spaced facing surface 82c, the second inverse inclination surface 82b, and the second joint surface 82a which are provided in this order from the distal end 85 of the second slot housed portion 81.

In addition, the distal end 75 of the first slot housed portion 71 and the distal end 85 of the second slot housed portion 81 are each formed as a flat surface that is orthogonal to the axial direction. Particularly, the distal ends 75 and 85 are provided between the first facing surface 72 and the first other end surface 73 and between the second facing surface 82 and the second other end surface 83, respectively, to have a chamfered shape.

### <Configuration of Insulating Portions>

Here, in the present embodiment, the coil portion 30 is provided with insulating portions 120. As illustrated in FIG. 17, an insulating portion 120 is provided on the conductor surface 40b (see FIG. 8B) of one segment conductor 40, among the plurality of segment conductors 40 which are disposed in parallel, at an axial position corresponding to the joint portion 90 of a different segment conductor 40 (hereinafter this joint portion 90 will be referred to as an "adjacent joint portion 90") disposed adjacent to the one segment conductor 40 in the radial direction. The insulating portion 120 has a thickness t2 which is larger than the thickness t1 of the insulating coating 40a of the adjacent joint portion 90.

Specifically, as illustrated in FIG. 8B, the insulating portion 120 includes the insulating coating 40a which is provided on the conductor surface 40b and which has the thickness t1, and an insulating member 121 that covers the insulating coating 40a and that has a function of insulating the segment conductor 40 and the adjacent joint portion 90 from each other. A thickness t3 of the insulating member 121 is smaller than the thickness t1. That is, the thickness t2 is larger than the thickness t1, and less than twice the thickness t1.

Particularly, the insulating member 121 is formed in a sheet shape. For example, the insulating member 121 contains the same material as the material contained in the insulating coating 40a. Preferably, the insulating member 121 contains an insulation material such as polyimide. The insulating member 121 in a sheet shape is wound around the outer periphery of the insulating coating 40a of the segment conductor 40 for at least one round (e.g. more than one round and less than two rounds). For example, the insulating member 121 in a sheet shape is fixed to the insulating coating 40a using an adhesive with insulation properties etc.

As illustrated in FIG. 9, the insulating portion 120 (insulating member 121) is provided on the slot housed portion 42a, of the slot housed portions 42a and 42b, the length of which along the axial direction is the longer. In addition, the insulating member 121 is provided on each of the plurality of slot housed portions 42a, while the insulating member 121 is not provided on the plurality of slot housed portions 42b.

A length L31 of the insulating portion 120 (insulating member 121) in the axial direction is equal to or more than an insulation creepage distance Dc along the center axis direction from the adjacent joint portion 90, and less than the length L3 of the slot 12 in the axial direction. Particularly, the length L31 of the insulating portion 120 (insulating member 121) is set to be at least equal to or more than the insulation creepage distance Dc with respect to the closer one of the distal end 75 of the first slot housed portion 71 and the distal end 85 of the second slot housed portion 81 which are adjacent in the radial direction. That is, as illustrated in FIG. 17, the insulation properties are secured by securing the insulation creepage distance Dc between the first facing surface 72 and the second facing surface 82, which are not provided with the insulating coating 40a, and the adjacent slot housed portion 42a.

### [Method of Manufacturing Stator]

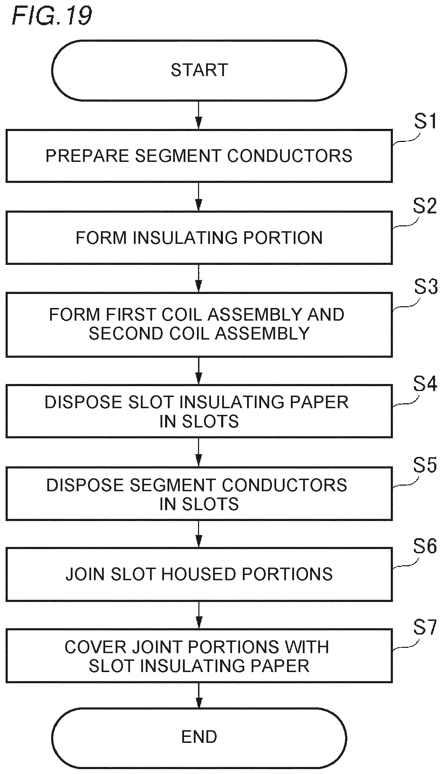

Next, a method of manufacturing the stator 100 according to the present embodiment will be described. FIG. 19 is a flowchart illustrating the method of manufacturing the stator 100.

### (Step of Preparing Segment Conductors)

First, in step S1, a plurality of segment conductors 40 are prepared. Specifically, the power conductors 50 which constitute the power line connection end portions Pt for the individual phases of the coil portion 30 which is connected through a Y connection, the neutral point conductors 60 which constitute the neutral point connection end portions Nt for the individual phases of the coil portion 30, and the general conductors 41 which constitute the other portions of the coil portion 30 are prepared.

For example, as illustrated in FIG. 8A, an insulating coating 40a made of an insulation material such as polyimide is formed (coated) on the conductor surface 40b in a rectangular shape which is made of a conductive material such as copper. After that, the conductor (rectangular conductive wire) on which the insulating coating 40a is formed is shaped using a shaping jig (not illustrated) to form the general conductors 41 (see FIG. 9), the radially outer power conductors 52 and the radially inner power conductors 53 (see FIG. 10) for forming the power conductors 50, two U-phase/W-phase neutral point segment conductors 61a and two V-phase neutral point segment conductors 61b for forming the radially outer neutral point conductor 61 (see FIG. 13), and two U-phase/W-phase neutral point segment conductors 62a and two V-phase neutral point segment conductors 62b for forming the radially inner neutral point conductor 62 (see FIG. 15).

### <Formation of General Conductors>

Particularly, as illustrated in FIG. 9, the general conductors 41 are each formed by forming a pair of slot housed portions 42a and 42b to be disposed in different slots 12 (e.g. with a slot pitch of six) and having different axial lengths from each other and a coil end portion 43 that connects between the pair of slot housed portions 42a and 42b.

### <Formation of Power Conductors>

In the present embodiment, as illustrated in FIG. 10, the power conductors 50 are each formed by electrically connecting the radially outer power conductor 52 and the radially inner power conductor 53 to each other by electrically joining (performing a power conductor joint step) the radially outer power conductor 52 and the radially inner power conductor 53 to the common power terminal member 51 via the lead wires 54. The power conductors 50 are formed for each of the phases.

Particularly, the welded portions 52c are formed by welding (joining) two power line coil end portions 52a, which constitute two power line connection end portions Pt and which are led out in the axial direction from two slot housed portions 42a, and the conductor plate 52b to each other, so that the radially outer power conductor 52 is formed. In addition, the welded portions 53c are formed by welding (joining) two power line coil end portions 53a, which constitute two power line connection end portions Pt and which are led out in the axial direction from the slot housed portions 42b, and the conductor plate 53b to each other, so that the radially inner power conductor 53 is formed. For example, the welding is implemented through any of resistance welding, arc welding, laser welding, and high-energy beam welding. Consequently, the radially outer power conductor 52 and the radially inner power conductor 53 with a slot pitch of one (in the case where the conductor plates 52b and 53b are included) or zero (in the case where the conductor plates 52b and 53b are not included) are formed.

In addition, a plurality of lead wires 54 with the insulating tube 51a attached to the outer periphery thereof and which are joined to the power terminal member 51 are prepared. The lead wire 54 is welded to the radially outer side of the conductor plate 52b of the radially outer power conductor 52 to form the joint portion 52d. In addition, the lead wire 54 is welded to the axially outer side (side in the direction of the arrow Z1) of the conductor plate 53b of the radially inner power conductor 53 to form the welded portion 53d. Consequently, the power conductors 50 which have a bifurcated shape in which the radially outer power conductor 52 is disposed on the radially outer side and the radially inner power conductor 53 is disposed on the radially inner side are formed.

### <Formation of Neutral Point Conductors>

As illustrated in FIG. 13, the U-phase/W-phase neutral point segment conductors 61a which each include the neutral point coil end portion 61c which connects between the slot housed portion 42a for U-phase and the slot housed portion 42a for W-phase are shaped. In addition, the U-phase/W-phase neutral point segment conductors 61a are shaped such that the slot pitch of one of the two U-phase/W-phase neutral point segment conductors 61a is nine while the slot pitch of the other is seven. One of the two U-phase/W-phase neutral point segment conductors 61a is disposed on the axially outer side (side in the direction of the arrow Z1) of the other. The V-phase neutral point segment conductors 61b which each include the slot housed portion 42a for V-phase and the neutral point coil end portion 61d are shaped.

After that, the welded portions 61e are formed by welding (performing a neutral point conductor joint step) the two neutral point coil end portions 61d on end surfaces of the two neutral point coil end portions 61c on the radially outer side (to each other). Consequently, the radially outer neutral point conductor 61 (neutral point conductor 60) in which the neutral point connection end portions NtU of the U-phase coil portion 30U, the neutral point connection end portions NtV of the V-phase coil portion 30V, and the neutral point connection end portions NtW of the W-phase coil portion 30W are electrically connected to each other is formed.

As illustrated in FIG. 15, the U-phase/W-phase neutral point segment conductors 62a which each include the neutral point coil end portion 62c which connects between the slot housed portion 42b for U-phase and the slot housed portion 42b for W-phase are shaped. In addition, the U-phase/W-phase neutral point segment conductors 62a are shaped such that the slot pitch of one of the two U-phase/W-phase neutral point segment conductors 62a is nine while the slot pitch of the other is seven. The V-phase neutral point segment conductors 62b which each include the slot housed portion 42b for V-phase and the neutral point coil end portion 62d are shaped.

After that, the welded portions 62e are formed by welding the two neutral point coil end portions 62d on end surfaces of the two neutral point coil end portions 62c on the axially outer side (to each other). Consequently, the radially inner neutral point conductor 62 (neutral point conductor 60) in which the neutral point connection end portions NtU of the U-phase coil portion 30U, the neutral point connection end portions NtV of the V-phase coil portion 30V, and the neutral point connection end portions NtW of the W-phase coil portion 30W are electrically connected to each other is formed.

### <Formation of Insulating Portion>

In step S2 (see FIG. 19), the insulating portion 120 which has the thickness t2 which is larger than the thickness t1 of the insulating coating 40a of the joint portion 90 is provided on the conductor surface 40b of the segment conductor 40.

As illustrated in FIG. 9, the insulating portion 120 is formed by attaching the insulating member 121 to the slot housed portion 42a, of the pair of slot housed portions 42a and 42b, the length of which along the axial direction is the longer. Specifically, the insulating member 121 is attached to each of the slot housed portions 42a of the general conductors 41, the slot housed portions 42a of the radially outer power conductors 52, and the slot housed portions 42a of the radially outer neutral point conductor 61.

Particularly, as illustrated in FIG. 8B, the insulating member 121 in a sheet shape which has the thickness t3 which is smaller than the thickness t1 is wound around the slot housed portion 42a for one round or more to be fixed. Consequently, in the case where the number of times of winding is one, the insulating portion 120 which has the thickness t2 (= t1 + t3) which is larger than the thickness t1 is formed on the slot housed portion 42a.

### (Formation of First Coil Assembly and Second Coil Assembly)

In step S3, as illustrated in FIG. 3, the first coil assembly 30a and the second coil assembly 30b in a circular ring shape which are composed of a plurality of segment conductors 40 are formed.

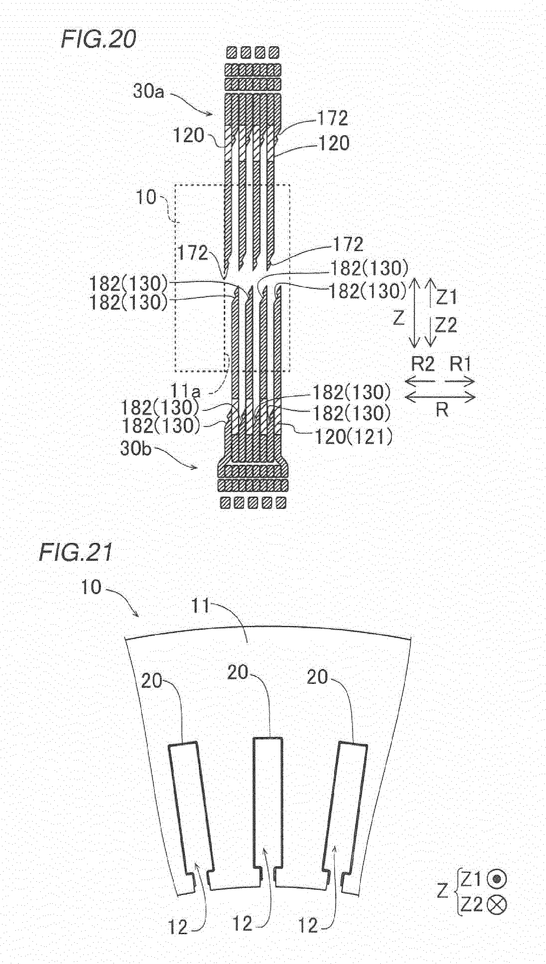

In the present embodiment, as illustrated in FIGS. 3 and 20, the first coil assembly 30a and the second coil assembly 30b in a circular ring shape which are composed of a plurality of segment conductors 40 are formed such that the insulating portion 120 of one segment conductor 40 is positioned at a position adjacent, in the radial direction, to the joint portion 90 of a different segment conductor 40 disposed adjacent to the one segment conductor 40 in the radial direction. While only some (two) of the plurality of insulating portions 120 are illustrated as hatched for illustration in FIG. 3, all the slot housed portions 42a are provided with the insulating portions 120 in the present embodiment.

Specifically, as illustrated in FIG. 3, the first coil assembly 30a in a circular ring shape is formed such that the plurality of general conductors 41, the power conductors 50 for the three phases, and the radially outer neutral point conductor 61 and the radially inner neutral point conductor 62 have an arrangement relationship that is generally similar to that of such conductors at the time when the conductors are disposed in the plurality of slots 12 (with the stator 100 in the completed state). In addition, the second coil assembly 30b in a circular ring shape is formed such that the plurality of general conductors 41 have an arrangement relationship that is generally similar to that of such conductors at the time when the conductors are disposed in the plurality of slots 12.

Particularly, as illustrated in FIG. 20, the first coil assembly 30a and the second coil assembly 30b are formed such that a plurality of (e.g. eight) segment conductors 40 are arranged in parallel in the radial direction and sets of the segment conductors 40 are arranged in parallel in the circumferential direction as many as the number of the slots 12. At this time, in the present embodiment, the first coil assembly 30a and the second coil assembly 30b are formed such that the insulating portion 120 of one segment conductor 40, among the plurality of segment conductors 40 which are disposed in parallel, is positioned at an axial position corresponding to the joint portion 90 of a different segment conductor 40 disposed adjacent to the one segment conductor 40 in the radial direction.

### (Step of Disposing Slot Insulating Paper in Slots)

In step S4 (see FIG. 19), as illustrated in FIG. 21, the slot insulating paper 20 is disposed in each of the plurality of slots 12. The slot insulating paper 20 is disposed with the radially inner side and both sides in the axial direction released or opened. In addition, as illustrated in FIG. 3, the slot insulating paper 20 which has been disposed is held in the slots 12 using the collar portions 22 on both sides in the axial direction.

### (Step of Disposing Segment Conductors in Slots)

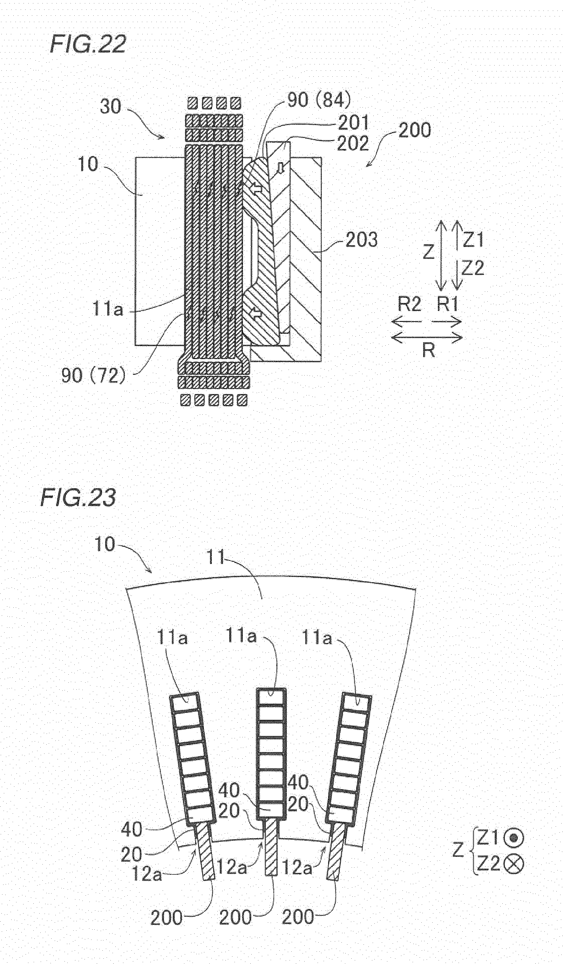

In step S5 (see FIG. 19), as illustrated in FIGS. 20 and 22, the plurality of segment conductors 40 are disposed in the plurality of slots 12. That is, the first coil assembly 30a and the second coil assembly 30b are inserted into the plurality of slots 12.

Particularly, first, as illustrated in FIG. 3, the first coil assembly 30a is disposed on the side in the direction of the arrow Z1 with respect to (e.g. directly above) the stator core 10. In addition, the second coil assembly 30b is disposed on the side in the direction of the arrow Z2 with respect to (e.g. directly below) the stator core 10. At this time, as illustrated in FIG. 20, the joint material 130 is disposed on at least one of the first surface 172 of the first slot housed portion 71 of the first coil assembly 30a and the corresponding second surface 182 of the second slot housed portion 81 of the second coil assembly 30b which face each other in the axial direction.

As illustrated in FIG. 22, the slot housed portions 42a and 42b of the first coil assembly 30a and the second coil assembly 30b are disposed in the respective slots 12 of the plurality of slots 12 by relatively moving the first coil assembly 30a and the second coil assembly 30b in the axial direction with respect to the plurality of slots 12. For example, the slot housed portions 42a and 42b are disposed in the respective slots 12 of the plurality of slots 12 (slots 12 in which the slot insulating paper 20 is disposed) by translating (linearly moving) the first coil assembly 30a in the direction of the arrow Z2 with respect to the stator core 10 and translating (linearly moving) the second coil assembly 30b in the direction of the arrow Z1 with respect to the stator core 10.

In the present embodiment, as illustrated in FIG. 16, the plurality of segment conductors 40 are disposed in the plurality of slots 12 such that: the first surface 172 to form the first facing surface 72 of the first slot housed portion 71, which is the slot housed portion 42a or 42b of the plurality of segment conductors 40 of the first coil assembly 30a, directs to the radially inner side; the first other end surface 73 of the first slot housed portion 71 directs to the radially outer side; the second surface 182 to form the second facing surface 82 of the second slot housed portion 81, which is the slot housed portion 42a or 42b of the plurality of segment conductors 40 of the second coil assembly 30b, and the second other end surface 83 which is continuous with the second surface 182 direct to the radially outer side; and the first slot housed portion 71 and the second slot housed portion 81 face each other in the axial direction.

Particularly, at least a portion of the first facing surface 72 to form the first joint surface 72a and a portion of the second facing surface 82 to form the second joint surface 82a are proximate to (contact) each other via the joint material 130 because a recessed and projected portion of the first surface 172 as the first facing surface 72, which is recessed and projected in the radial direction, and a recessed and projected portion of the second surface 182 as the second facing surface 82, which is recessed and projected in the radial direction, are engaged with each other.

At this time, in the present embodiment, the first other end surface 73 is disposed (offset) so as to project toward the radially outer side with respect to the second other end surface 83, and the second one end surface 84 is disposed (offset) so as to project toward the radially inner side with respect to the first one end surface 74. In addition, the distal end portion 73a of the first other end surface 73 on the side in the Z2 direction and the boundary point 86 which is the distal end portion of the second other end surface 83 on the side in the Z1 direction are disposed with the clearance CL5 therebetween in the Z direction. In addition, the boundary point 76 which is the distal end portion of the first one end surface 74 on the side in the Z2 direction and the distal end portion 84a of the second one end surface 84 on the side in the Z1 direction are disposed with the clearance CL4 therebetween in the Z direction. That is, the axial position P5 of the distal end portion 73a is provided on the side in the Z1 direction with respect to the axial position P6 of the boundary point 86, and the axial position P7 of the boundary point 76 is provided on the side in the Z1 direction with respect to the axial position P8 of the distal end portion 84a.

In addition, as illustrated in FIG. 17, the plurality of segment conductors 40 are disposed in the slots 12 such that the insulating portion 120 of one segment conductor 40, among the plurality of segment conductors 40 which are disposed in parallel in the radial direction, is positioned at an axial position corresponding to the first facing surface 72 or the second facing surface 82 (a portion to form the joint portion 90) of a different segment conductor 40 disposed adjacent to the one segment conductor 40 in the radial direction with the first coil assembly 30a and the second coil assembly 30b disposed in the slots 12.

### (Step of Joining Slot Housed Portions)

In step S6 (see FIG. 19), the joint portion 90 is formed as at least a part (first joint surface 72a) of the first facing surface 72 and at least a part (second joint surface 82a) of the second facing surface 82 are joined to each other by a heating device (not illustrated) heating at least the joint material 130 while the pressing jig 200 is pressing the slot housed portions 42a and 42b (against each other).

Here, as illustrated in FIG. 22, the pressing jig 200 is provided with movable members 201, pressing members 202, and a holding member 203. The number of the movable members 201 is the same as the number of the slots 12. The holding member 203 is configured to hold the movable members 201 and the pressing members 202. In addition, the pressing members 202 are each formed in a wedge shape (tapered shape) to be tapered toward one axial side, for example, and configured to transfer a pressing force to the segment conductors 40 while moving the movable member 201 toward the radially outer side by pressing the movable member 201 toward the radially outer side when the pressing member 202 is moved in the axial direction.

As illustrated in FIG. 23, the pressing jigs 200 (movable members 201) are disposed in the opening portions 12a of the slots 12 (on the radially inner side of the slots 12). Consequently, the plurality of slot housed portions 42a and 42b which are arranged in parallel in the radial direction are interposed between the pressing jigs 200 and the wall portions 11a of the stator core 10 on both sides in the radial direction. When the pressing jigs 200 apply a pressing force (load) to the plurality of slot housed portions 42a and 42b, which are arranged in parallel in the radial direction, toward the radially outer side, a reaction force directed from the wall portions 11a toward the radially inner side is generated, and the plurality of slot housed portions 42a and 42b which are arranged in parallel in the radial direction are pressed from both sides in the radial direction.

Here, in the present embodiment, with the first other end surface 73 disposed (offset) so as to project toward the radially outer side with respect to the second other end surface 83, the first slot housed portion 71 is pressed toward the radially inner side by the wall portion 11a of the stator core 10 as the wall portion 11a contacts the first other end surface 73 of the first slot housed portion 71 disposed on the radially outermost side, among the plurality of first slot housed portions 71. In addition, with the second one end surface 84 disposed (offset) so as to project toward the radially inner side with respect to the first one end surface 74, the second slot housed portion 81 is pressed toward the radially outer side by the pressing jig 200 as the pressing jig 200 contacts the second one end surface 84 of the second slot housed portion 81 disposed on the radially innermost side, among the plurality of second slot housed portions 81.

Consequently, the first facing surface 72 and the second facing surface 82 are pressed against each other in the direction in which the first facing surface 72 and the second facing surface 82 face each other. With a pressing force and a reaction force transferred between the slot housed portions 42a and 42b which are disposed in parallel in the radial direction, the first other end surface 73 of the first slot housed portion 71 disposed on the radially outermost side and the first other end surface 73 of the first slot housed portion 71 on the radially innermost side or the first other end surfaces 73 of the first slot housed portions 71 other than the second slot housed portions 81 are pressed toward the radially outer side, and the second one end surfaces 84 of the second slot housed portions 81 are pressed toward the radially inner side.

Particularly, the first facing surface 72 and the second facing surface 82 which face each other in the slot 12 are pressed against each other as the insulating member 121 of the first slot housed portion 71 contacts the first other end surface 73 or the second one end surface 84 which is adjacent in the radial direction.

The joint material 130 is cured with a part thereof volatilized when the joint material 130, the first slot housed portion 71, and the second slot housed portion 81 are heated by a heating device (such as a heater, hot air, etc.) while the first facing surface 72 and the second facing surface 82 are pressed against each other. The joint material 130 is heated to a curing temperature or higher. The first slot housed portion 71 and the second slot housed portion 81 are joined and electrically connected to each other using a conductive material (such as silver) contained in the joint material 130. All the first joint surfaces 72a and the second joint surfaces 82a that face each other are joined to each other in all the slots 12.

Consequently, the first slot housed portion 71 of the power conductor 50 and the neutral point conductor 60 and the second slot housed portion 81 which is one of the slot housed portions 42a and 42b of the general conductor 41 are joined to each other in one slot 12, and the second slot housed portion 81 which is the other of the slot housed portions 42a and 42b of the general conductor 41 and the first slot housed portion 71 of the general conductor 41 are joined to each other in a different slot 12. As a result, the coil portion 30 in a wave-wound shape is formed.

As illustrated in FIG. 17, the first slot housed portion 71 and the second slot housed portion 81 are electrically joined to each other to form the joint portion 90. Consequently, the insulating portion 120 is disposed at a position (axial position) adjacent to the joint portion 90 in the radial direction. In addition, the axial position P11 of the joint portion 90 is different from the axial position P12 of the joint portion 90 of the segment conductor 40 which is adjacent in the radial direction.

### (Step of Covering Joint Portions with Slot Insulating Paper)

In step S7 (see FIG. 19), as illustrated in FIG. 5, the joint portion cover portion 21 which covers at least the joint portion 90 is formed by deforming (folding) the slot insulating paper 20 such that the radially inner side of the first slot housed portion 71 and the second slot housed portion 81 disposed on the radially innermost side is covered by the slot insulating paper 20. After that, the stator 100 is completed as illustrated in FIG. 2. As illustrated in FIG. 1, the stator 100 and the rotor 101 are combined with each other to manufacture the rotary electric machine 102.

### [Effects of Structure According to Present Embodiment]

The following effects can be obtained with the structure according to the embodiment described above.

In the embodiment described above, the first leg portion (71) is provided with a first facing surface (72) which faces the second leg portion (81) and at least a part of which directs to one side in the radial direction of the armature core (10), and the second leg portion (81) is provided with a second facing surface (82) which faces the first facing surface (72) and at least a part of which directs to the other side in the radial direction. Consequently, in the case where a load is applied to the first leg portion (71) toward one side in the radial direction, the load can be received by the second facing surface (82) of the second leg portion (81). In addition, in the case where a load is applied to the second leg portion (81) toward the other side in the radial direction, the load can be received by the first facing surface (72) of the first leg portion (71). As a result, at least a part (72a) of the first facing surface (72) and at least a part (82a) of the second facing surface (82) can be joined to each other with the first facing surface (72) and the second facing surface (82) pushing each other by pressing the first leg portion (71) or the second leg portion (81) in the radial direction. As a result, the pressing force with which the first facing surface (72) and the second facing surface (82) push each other (pressing force against the joint portion) can be prevented from being non-uniform unlike the case where the first leg portion (71) or the second leg portion (81) is indirectly pressed from the outer side (coil end portion (43)) in the center axis direction of the armature core (10) which is away from the joint portion. Consequently, the quality of the joint between the first segment conductor (70) and the second segment conductor (80) can be improved.

In the embodiment described above, in addition, the first other end surface (73) is an end surface of the first leg portion (71) on the other side in the radial direction that extends along the center axis direction; the second other end surface (83) is an end surface of the second leg portion (81) on the other side in the radial direction that extends along the center axis direction; and a distal end portion (75) of the first other end surface (73) on the other side in the center axis direction and a distal end portion (86) of the second other end surface (83) on one side in the center axis direction are disposed as spaced with a clearance (CL5) between the distal end portions (75, 86) in the center axis direction. With such a configuration, a dimensional error in the center axis direction and an error in the arrangement position between the first leg portion (71) and the second leg portion (81) can be absorbed by the clearance (CL5). Thus, the distal end portion (75) of the first other end surface (73) on the other side in the center axis direction and the distal end portion (86) of the second other end surface (83) on one side in the center axis direction can be prevented from mechanically interfering with each other.

In the embodiment described above, in addition, the first leg portion (71) includes a first one end surface (74) which is an end surface provided on an opposite side from the first other end surface (73) in the radial direction and extending along the center axis direction, the first one end surface (74) being continuous with the first facing surface (72); the second leg portion (81) includes a second one end surface (84) which is an end surface provided on an opposite side from the second other end surface (83) in the radial direction and extending along the center axis direction, the second one end surface (84) directing to one side in the radial direction; the second one end surface (84) is disposed so as to project toward one side in the radial direction with respect to the first one end surface (74); and a distal end portion (76) of the first one end surface (74) on the other side in the center axis direction and a distal end portion (84a) of the second one end surface (84) on one side in the center axis direction are disposed as spaced with a clearance (CL4) between the distal end portions (76, 84a) in the center axis direction. With such a configuration, a dimensional error in the center axis direction and an error in the arrangement position between the first leg portion (71) and the second leg portion (81) can be absorbed by the clearance (CL4). As a result, the distal end portion (73a) of the first other end surface (73) on the other side in the center axis direction and the distal end portion (86) of the second other end surface (83) on one side in the center axis direction can be prevented from mechanically interfering with each other, and the distal end portion (76) of the first one end surface (74) on the other side in the center axis direction and the distal end portion (84a) of the second one end surface (84) on one side in the center axis direction can be prevented from mechanically interfering with each other.

In the embodiment described above, in addition, the first leg portion (71) is provided with a first other end surface (73) that directs to the other side in the radial direction, and the second leg portion (81) is provided with a second other end surface (83) that directs to the other side in the radial direction and that is continuous with the second facing surface (82). The first other end surface (73) is disposed so as to project toward the other side in the radial direction with respect to the second other end surface (83). Consequently, the pressing portion (11a, 200) (the pressing jig (200) or a part of the armature core (10)) can be caused to abut against the first other end surface (73) earlier than the second other end surface (83) by moving the pressing portion (11a, 200) from the other side toward one side in the radial direction when the first leg portion (71) is pressed from the other side toward one side in the radial direction. As a result, the first leg portion (71) can be pressed along the direction in which the first facing surface (72) directs (one side in the radial direction). With the first other end surface (73) and the pressing portion (11a, 200) abutting against each other, in addition, the pressing portion (11a, 200) and the second other end surface (83) can be prevented from abutting against each other at at least the joint portion (90) and in the vicinity of the joint portion (90). Consequently, the second leg portion (81) can be prevented from being pressed in the opposite direction to the direction in which the second facing surface (82) directs (other side in the radial direction) and in the direction in which the joint portions (72a, 82a) are moved away from each other due to the pressing portion (11a, 200) pressing the second other end surface (83) toward one side in the radial direction. As a result, the first leg portion (72) can be pressed appropriately such that the first facing surface (72) and the second facing surface (82) push each other, and thus the quality of the joint between the first segment conductor (70) and the second segment conductor (80) can be further improved.

In the embodiment described above, in addition, a stepped portion (111) is formed at a boundary portion between the first other end surface (73) and the second other end surface (83). With such a configuration, the first other end surface (73) can be easily disposed so as to project toward the other side in the radial direction with respect to the second other end surface (83) by providing the stepped portion (111).

In the embodiment described above, in addition, the first other end surface (73) is an end surface (73) of the first leg portion (71) on the other side in the radial direction that extends along the center axis direction; the second other end surface (83) is an end surface (83) of the second leg portion (81) on the other side in the radial direction that extends along the center axis direction; and the stepped portion (111) is shaped such that a distal end portion (73a) of the first other end surface (73) on the other side in the center axis direction projects toward the other side in the radial direction with respect to a distal end portion (86) of the second other end surface (83) on one side in the center axis direction. With such a configuration, at least the first other end surface (73) can be projected toward the other side in the radial direction with respect to the second other end surface (83) at the stepped portion (111) in the vicinity of the joint portion (90), and thus the first leg portion (72) can be pressed such that the first facing surface (72) and the second facing surface (82) push each other more appropriately in the vicinity of the joint portion (90). As a result, the quality of the joint between the first segment conductor (70) and the second segment conductor (80) can be further improved.

In the embodiment described above, in addition, the first leg portion (71) includes a first one end surface (74) provided on an opposite side from the first other end surface (73) in the radial direction, the first one end surface (74) being continuous with the first facing surface (72); the second leg portion (81) includes a second one end surface (84) provided on an opposite side from the second other end surface (83) in the radial direction, the second one end surface (84) directing to one side in the radial direction; and the second one end surface (84) is disposed so as to project toward one side in the radial direction with respect to the first one end surface (74). With such a configuration, the first one end surface (74) of the first leg portion (71) can be prevented from being pressed toward the other side in the radial direction while preventing the second other end surface (83) of the second leg portion (81) from being pressed toward one side in the radial direction. As a result, the first leg portion (71) and the second leg portion (81) can be appropriately pressed from both sides in the radial direction in the direction in which the first facing surface (72) and the second facing surface (82) push each other while the first leg portion (71) and the second leg portion (81) are prevented from being pressed in the direction in which the first facing surface (72) and the second facing surface (82) are moved away from each other.

In the embodiment described above, in addition, the armature core (10) is provided with a wall portion (11a) on the other side in the radial direction with respect to the first other end surface (73); and the slots (12) are each provided with an opening portion (12a) on one side in the radial direction with respect to the second one end surface (84). With such a configuration, the first leg portion (71) and the second leg portion (81) can be pressed from both sides in the radial direction with the first leg portion (71) and the second leg portion (81) held between the pressing jig (200) and the wall portion (11a) in the radial direction, by disposing the pressing jig (200) at the opening portion (12a) and moving the pressing jig (200) toward the other side in the radial direction. As a result, the use of the wall portion (11a) eliminates the need to provide the pressing jig (200) on each of both sides in the radial direction, which accordingly prevents complication of the manufacturing device (manufacturing equipment) for the armature (100).

In the embodiment described above, in addition, a first deviation width (d1), which is a width of deviation between a position of the first other end surface (73) in the radial direction and a position of the second other end surface (83) in the radial direction, is equal to a second deviation width (d2), which is a width of deviation between a position of the first one end surface (74) in the radial direction and a position of the second one end surface (84) in the radial direction. With such a configuration, the width (W21) of the first segment conductor (70) (first leg portion (71)) in the radial direction and the width (W22) of the second segment conductor (80) (second leg portion (81)) in the radial direction can be made equal to each other, and thus the conductor (conductor wire) can be commonalized between the first segment conductor (70) and the second segment conductor (80). As a result, an increase in the number of types of materials (members) for manufacturing the armature (100) can be prevented.

In the embodiment described above, in addition, a first deviation width (d1), which is a width of deviation between a position of the first other end surface (73) in the radial direction and a position of the second other end surface (83) in the radial direction, is more than a thickness of an insulating coating (40a) of the segment conductor (40). With such a configuration, the pressing jig (200) can be reliably prevented from abutting against the second other end surface (83) compared to the case where the first deviation width (d1) is equal to or less than the thickness (t1) of the insulating coating (40a) of the segment conductor (40).

In the embodiment described above, in addition, the first facing surface (72) of the first segment conductor (70) has a first inclined surface (72) inclined with respect to the center axis direction; and the second facing surface (82) of the second segment conductor (80) has a second inclined surface (82) inclined with respect to the center axis direction. With such a configuration, the first segment conductor (70) and the second segment conductor (80) can be guided in the center axis direction and the radial direction along the first inclined surface (72) and the second inclined surface (82) by pressing the first segment conductor (70) and the second segment conductor (80) in the radial direction. As a result, the first facing surface (72) and the second facing surface (82) can be easily disposed to face each other with the first segment conductor (70) and the second segment conductor (80) pressed against each other even in the case where the first facing surface (72) and the second facing surface (82) are spaced (deviate from their design positions) in the center axis direction or the radial direction.

In the embodiment described above, in addition, the first inclined surface (72) includes a joint surface (72a) to be joined to the second inclined surface (82), and an inverse inclination surface (72b) inclined in an opposite direction to a direction in which the joint surface (72a) is inclined with respect to the center axis direction. With such a configuration, a projecting portion that projects in the radial direction or a recessed portion dented in the radial direction can be formed by the joint surface (72a) and the inverse inclination surface (72b), and thus the projecting portion or the recessed portion of the first inclined surface (72) and the second inclined surface (82) can be engaged with each other in the radial direction. As a result, the relative positions of the first inclined surface (72) and the second inclined surface (82) in the center axis direction can be regulated, and thus the first inclined surface (72) and the second inclined surface (82) can be joined to each other while being disposed at appropriate relative positions.

In the embodiment described above, in addition, an inclination angle (θ2) of the inverse inclination surface (72b) with respect to the center axis direction is smaller than an inclination angle (θ1) of the joint surface (72a) with respect to the center axis direction. With such a configuration, a reduction in the thickness (W31) of the first leg portion (71) in the radial direction at an end portion of the inverse inclination surface (72b) on the opposite side from the joint surface (72a) can be prevented in the case where the inverse inclination surface (72b) is provided on the root side of the first leg portion (71) with respect to the joint surface (72a), compared to the case where the inclination angle (θ2) of the inverse inclination surface (72b) is relatively large. As a result, the mechanical strength of a portion of the first leg portion (71) in the vicinity of the first facing surface (72) can be secured, and a reduction in the cross-sectional area of the conductor (40c) through which a current flows can be prevented.

In the embodiment described above, in addition, an area (S11) of the joint surface (72a) is larger than an area (S12) of the inverse inclination surface (72b). With such a configuration, the area (S11) of the joint surface (72a) through which electric power is transferred between the first leg portion (71) and the second leg portion (81) can be made relatively large.

In the embodiment described above, in addition, the first inclined surface (72) includes a spaced facing surface (72c) formed to be continuous with the inverse inclination surface (72b) on an opposite side from the joint surface (72a) and disposed as spaced from the second inclined surface (82). With such a configuration, even in the case where a dimensional error is caused between the first inclined surface (72) and the second inclined surface (82), the dimensional error can be absorbed by the clearance (CL4) between the spaced facing surface (72c) and the second inclined surface (82). As a result, it is possible to prevent separation between the joint surface (72a) of the first inclined surface (72) and the second inclined surface (82) (the joint surface (72a) of the second inclined surface (82)) due to the dimensional error resulting in abutment between a portion of the first inclined surface (72) that is different from the joint surface (72a) and the second inclined surface (82), and deformation of the segment conductor (40) due to the dimensional error.

In the embodiment described above, in addition, the first inclined surface (72) is formed such that a sectional surface of the first inclined surface (72) taken along the radial direction has an S-shape. With such a configuration, the first inclined surface (72) can be easily provided with the joint surface (72a) and the inverse inclination surface (72b), and thus the first facing surface (72) and the second facing surface (82) can be joined to each other with the first inclined surface (72) and the second inclined surface (82) engaged with each other in the radial direction.

In the embodiment described above, in addition, the first inclined surface (72) and the second inclined surface (82) are formed such that a sectional surface of each of the first and second inclined surfaces (72, 82) taken along the radial direction has an asymmetrical shape with respect to a center point (C2) of the first inclined surface (72). With such a configuration, the area (S11) of the joint surface (72a) can be easily made larger than the area (S12) of the inverse inclination surface (72b) in the case where the first inclined surface (72) is provided with the joint surface (72a) and the inverse inclination surface (72b).

In the embodiment described above, in addition, a plurality of the first leg portions (71) are disposed adjacent to each other in the radial direction; the first facing surface (72) of one of the plurality of the first leg portions (71) is disposed at a different position in the center axis direction from the first facing surface (72) of a different first leg portion(71) that is adjacent to the one of the plurality of the first leg portions in the radial direction; and the first other end surface (73) of each of the plurality of the first leg portions (71) is disposed so as to project toward the other side in the radial direction with respect to the corresponding second other end surface (83). Here, while the surface of the leg portion (42a, 42b) is provided with the insulating coating (40a), the first facing surface (72) is not provided with the insulating coating (40a) in order to be joined to the second facing surface (82). Regarding this respect, with a configuration such as that according to the embodiment described above, the first facing surfaces (72) which are not provided with the insulating coating (40a) can be prevented from being proximate to each other even in the case where a plurality of first leg portions (71) are disposed in parallel. As a result, the insulation between the plurality of first leg portions (71) can be secured. In addition, as described above, the first other end surface (73) of each of the plurality of first leg portions (71) is disposed so as to project toward the other side in the radial direction with respect to the corresponding second other end surface (83). Consequently, the first other end surface (73) of each of the plurality of first leg portions (71) can be pressed toward one side in the radial direction by pressing the first leg portion (71) that is the closest to the other side in the radial direction, among the plurality of first leg portions (71). As a result, the first leg portion (71) and the second leg portion (81) can be easily joined to each other appropriately even in the case where the plurality of first leg portions (71) are disposed in parallel.

In the embodiment described above, in addition, a distal end portion (75) of the first leg portion (71) and a distal end portion (85) of the second leg portion (81) are each formed to have a flat surface (75, 85) that is orthogonal to the center axis direction. Here, in the case where the distal end portion of the first leg portion (71) and the distal end portion of the second leg portion (81) are formed in a pointed shape (tapered shape), it is conceivable that the portion which has the pointed shape interferes with a different leg portion (71, 81) in the case where a dimensional error is caused. With a configuration such as that according to the embodiment described above, in contrast, the distal end portion (75, 85) has the flat surface (75, 85), and thus interference of the distal end portion (75, 85) with the different leg portion (71, 81) can be prevented compared to the case where the distal end portion is formed in a pointed shape.

In the embodiment described above, in addition, the first segment conductor (70) includes one coil end portion (43) formed to be continuous with the first leg portion (71) and disposed on one side in the center axis direction with respect to the armature core (10); and the second segment conductor (80) includes the other coil end portion (43) formed to be continuous with the second leg portion (81) and disposed on the other side in the center axis direction with respect to the armature core (10). With such a configuration, the coil portion (30) can be constituted easily by joining the first facing surface (72) and the second facing surface (82) to each other with the first segment conductor (70) and the second segment conductor (80) disposed so as to interpose the armature core (10) therebetween from both sides in the center axis direction.

### [Effects of Method of Manufacturing Armature According to Present Embodiment]

The following effects can be obtained with the method of manufacturing an armature according to the embodiment described above.

In the embodiment described above, the pressing force with which the first surface (172) and the second surface (182) push each other (pressing force against the joint portion) can be prevented from being non-uniform, by configuring the step (S5) of disposing the plurality of segment conductors (40) as described above. Consequently, it is possible to provide a method of manufacturing an armature (100) that can improve the quality of the joint between the first segment conductor (70) and the second segment conductor (80). In addition, the first leg portion (71) can be pressed with the second leg portion (81) prevented from being pressed, by configuring the step (S6) of forming the coil portion (30) by joining the leg portions (42a, 42b) to each other as described above. As a result, the first leg portion (72) can be pressed appropriately such that the first surface (172) and the second surface (182) push each other, and thus it is possible to provide a method of manufacturing an armature (100) that can further improve the quality of the joint between the first segment conductor (70) and the second segment conductor (80).

In the embodiment described above, in addition, the step (S5) of disposing the plurality of segment conductors (40) is a step (S5) of disposing the plurality of segment conductors (40) in the armature core (10) with a joint material (130) disposed on one of the first surface (172) and the second surface (182); and the step (S6) of forming the coil portion (30) is a step of joining the at least a part (72a) of the first surface (172) of the first segment conductor (70) and the at least a part (82a) of the second surface (182) of the second segment conductor to each other by pressing the first segment conductor (70) toward one side in the radial direction by use of the pressing portion (11a, 200) with the first surface (172) and the second surface (182) contacting each other via the joint material (130) and with the first other end surface (73) projecting toward the other side in the radial direction with respect to the second other end surface (83), and by heating and curing the joint material (130). With such a configuration, the first surface (172) and the second surface (182) can be strongly secured to each other by the joint material (130) compared to the case where the first surface (172) and the second surface (182) are simply engaged with (contact) each other. With a configuration such as that according to the embodiment described above, in addition, the first leg portion (72) can be pressed such that the first surface (172) and the second surface (182) push each other, and thus the joint material (130) can be cured with the first surface (172) and the second surface (182) pushing each other via the joint material (130). Consequently, formation of a clearance between the first surface (172) and the second surface (182) and the joint material (130) can be prevented, and thus the first surface (172) and the second surface (182) can be joined to each other more appropriately.

In the embodiment described above, in addition, the first other end surface (73) is an end surface of the first leg portion (71) on the other side in the radial direction that extends along the center axis direction; the second other end surface (83) is an end surface of the second leg portion (81) on the other side in the radial direction that extends along the center axis direction; and the step (S5) of disposing the plurality of segment conductors (40) is a step of disposing the plurality of segment conductors (40) in the armature core (10) such that a distal end portion (73a) of the first other end surface (73) on the other side in the center axis direction and a distal end portion (86) of the second other end surface (83) on one side in the center axis direction are spaced with a clearance (CL5) between the distal end portions (73a, 86) in the center axis direction. With such a configuration, a dimensional error in the center axis direction and an error in the arrangement position between the first leg portion (71) and the second leg portion (81) can be absorbed by the clearance (CL5). Thus, the distal end portion (75) of the first other end surface (73) on the other side in the center axis direction and the distal end portion (86) of the second other end surface (83) on one side in the center axis direction can be prevented from mechanically interfering with each other.

In the embodiment described above, in addition, the first leg portion (71) includes a first one end surface (74) which is an end surface provided on an opposite side from the first other end surface (73) in the radial direction and extending along the center axis direction, the first one end surface (74) being continuous with the first surface (172); the second leg portion (81) includes a second one end surface (84) which is an end surface provided on an opposite side from the second other end surface (83) in the radial direction and extending along the center axis direction, the second one end surface (84) directing to one side in the radial direction; and the step (S5) of disposing the plurality of segment conductors (40) is a step of disposing the plurality of segment conductors (40) in the armature core (10) such that the second one end surface (84) projects toward one side in the radial direction with respect to the first one end surface (74) and a distal end portion (76) of the first one end surface (74) on the other side in the center axis direction and a distal end portion (74) of the second one end surface (84) on one side in the center axis direction are spaced with a clearance (CL4) between the distal end portions (74, 76) in the center axis direction. With such a configuration, a dimensional error in the center axis direction and an error in the arrangement position between the first leg portion (71) and the second leg portion (81) can be absorbed by the clearance (CL4). As a result, the distal end portion (73a) of the first other end surface (73) on the other side in the center axis direction and the distal end portion (86) of the second other end surface (83) on one side in the center axis direction can be prevented from mechanically interfering with each other, and the distal end portion (76) of the first one end surface (74) on the other side in the center axis direction and the distal end portion (84a) of the second one end surface (84) on one side in the center axis direction can be prevented from mechanically interfering with each other.

### [Modifications]

The embodiment disclosed herein should be considered as exemplary and non-limiting in all respects. The scope of the present invention is defined by the scope of the claims, rather than the description of the embodiment described above, and includes all changes (modifications) that fall within the scope of the claims and the meaning and scope of equivalence.

### <First Modification>

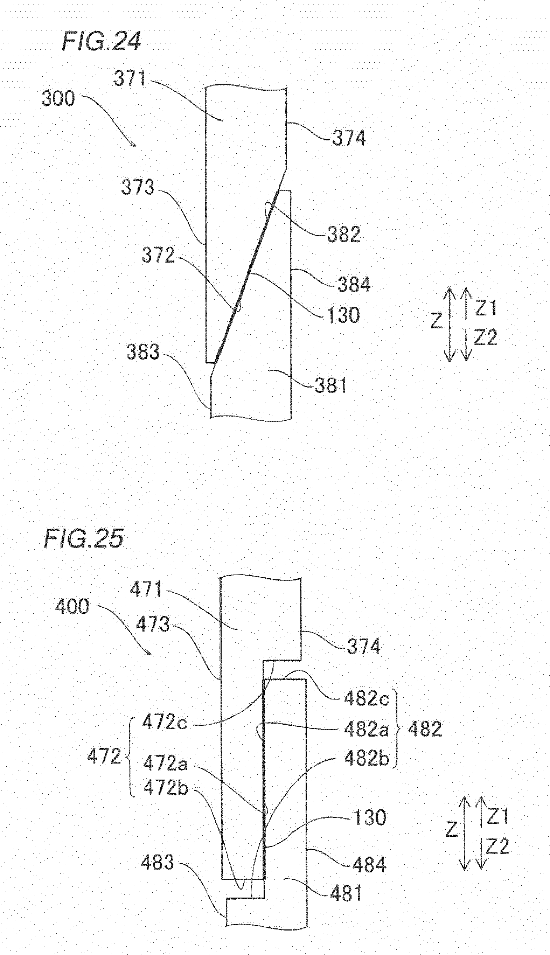

For example, in the embodiment described above, the first joint surface which is a part of the first facing surface and the second joint surface which is a part of the second facing surface are joined to each other. However, the present invention is not limited thereto. For example, as in a stator 300 according to a first modification illustrated in FIG. 24, the entirety of a first facing surface 372 and generally the entirety (the entirety) of a second facing surface 382 may be joined to each other.

In the embodiment described above, in addition, the first facing surface is formed so as to have an S-shaped sectional surface taken along the radial direction. However, the present invention is not limited thereto. For example, as in the stator 300 according to the first modification illustrated in FIG. 24, the first facing surface 372 which is formed from only a flat inclined surface that directs to one radial side and the second facing surface 382 which is formed from only a flat inclined surface that directs to the other radial side may be joined to each other.

Also in the stator 300 according to the first modification, as in the embodiment described above, a first other end surface 373 is disposed on the other radial side with respect to a second other end surface 383, and a second one end surface 384 is disposed on one radial side with respect to a first one end surface 374.

### <Second Modification>

In the embodiment described above, in addition, the first facing surface is provided with the first inclined surface, and the second facing surface is provided with the second inclined surface. However, the present invention is not limited thereto. For example, as in a stator 400 according to a second modification illustrated in FIG. 25, a first facing surface 472 may not be provided with an inclined surface, and the first facing surface 472 may be constituted in a stepped shape from a facing surface 472a which extends along the axial direction and flat surfaces 472b and 472c which are orthogonal to the axial direction. In this case, a second facing surface 482 is formed so as to face the facing surface 472a of the first facing surface 472 in the radial direction. In addition, the second facing surface 482 includes a facing surface 482a that faces the facing surface 472a in the radial direction, a flat surface 482b that faces the flat surface 472b in the axial direction, and a flat surface 482c that faces the flat surface 472c in the axial direction. Also in the stator 400 according to the second modification, as in the embodiment described above, a first other end surface 473 is disposed on the other radial side with respect to a second other end surface 483, and a second one end surface 484 is disposed on one radial side with respect to a first one end surface 474.

### <Third Modification>

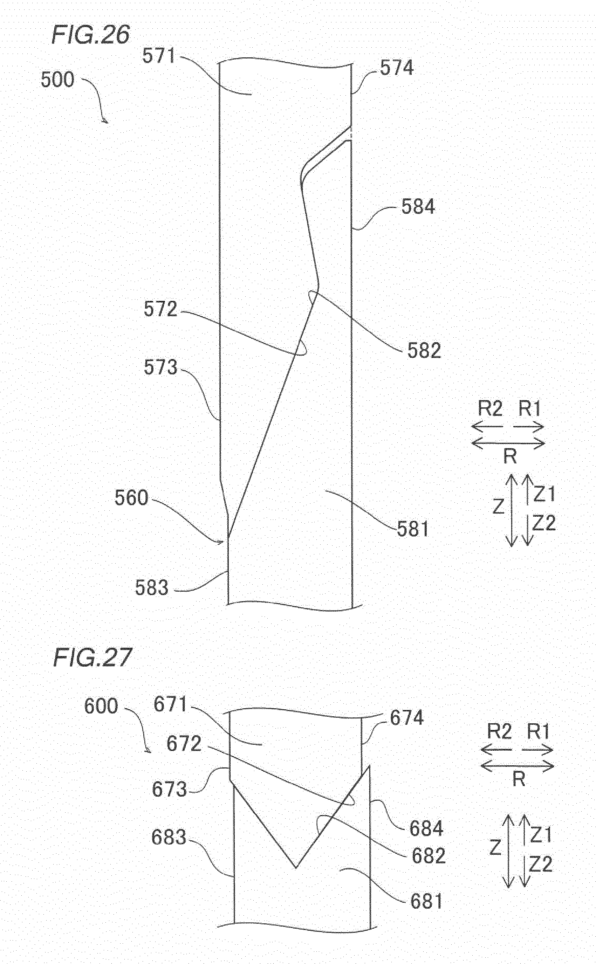

In the embodiment described above, in addition, a first stepped portion is provided at the boundary portion between the first other end surface and the second other end surface. However, the present invention is not limited thereto. For example, as in a stator 500 according to a third modification illustrated in FIG. 26, a first other end surface 573 and a second other end surface 583 are formed to be generally flush with each other at a boundary portion 560. Also in the stator 500 according to the third modification, a portion of the first other end surface 573 of a first slot housed portion 571 other than the boundary portion 560 is disposed on the other radial side with respect to a second other end surface 383 of a first slot housed portion 581.

In the embodiment described above, in addition, the second one end surface is disposed so as to project toward the radially inner side with respect to the first one end surface. However, the present invention is not limited thereto. For example, as in the stator 500 according to the third modification illustrated in FIG. 26, a second one end surface 584 may be formed to be generally flush with a first one end surface 574. In order to reliably generate a pressing force from both sides in the radial direction at the joint portion, the second one end surface 84 is preferably disposed so as to project toward the radially inner side with respect to the first one end surface 74 as in the embodiment described above.

### <Fourth Modification>

In the embodiment described above, in addition, the first facing surface is formed so as to have an S-shaped sectional surface taken along the radial direction. However, the present invention is not limited thereto. For example, as with a first facing surface 672 and a second facing surface 682 of a stator 600 according to a fourth modification illustrated in FIG. 27, the first facing surface 672 and the second facing surface 682 may be formed so as to have a V-shaped sectional surface taken along the radial direction. In this case, a facing surface of the first facing surface 672 on one radial side (in the direction of the arrow R1) serves as a joint surface, and a facing surface of the second facing surface 682 on one radial side (in the direction of the arrow R1) serves as a joint surface. Also in the stator 600 according to the fourth modification, as in the embodiment described above, a first other end surface 673 of a first slot housed portion 671 is disposed on the other radial side with respect to a second other end surface 683 of a second slot housed portion 681, and a second one end surface 684 is disposed on one radial side with respect to a first one end surface 674.

### <Fifth Modification>

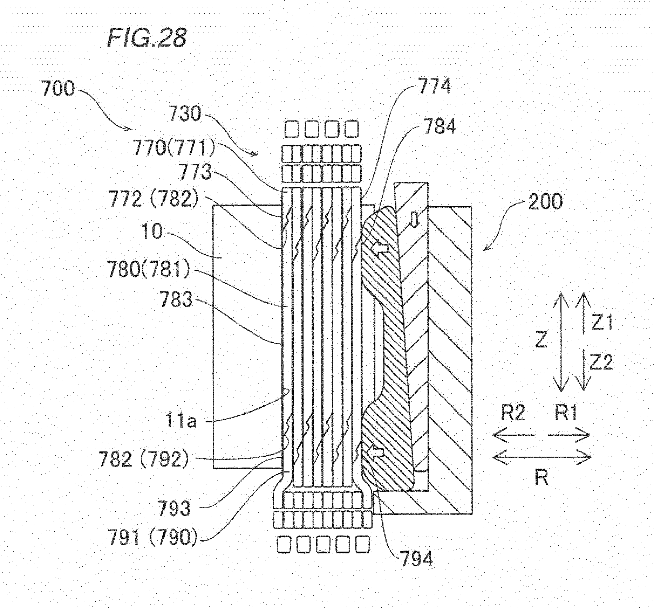

In the embodiment described above, in addition, a segment conductor disposed on one axial side with respect to the stator core and a segment conductor disposed on the other axial side with respect to the stator core are joined to each other at one location in the slot. However, the present invention is not limited thereto. For example, as in a stator 700 according to a fifth modification illustrated in FIG. 28, a first slot housed portion 771 (first facing surface 772) of a first segment conductor 770 and a second slot housed portion 781 (second facing surface 782) of a second segment conductor 780 are joined to each other and the second slot housed portion 781 (second facing surface 782) of the second segment conductor 780 and a third slot housed portion 791 (third facing surface 792) of a third segment conductor 790 are joined to each other in the slot. In the case of the fifth modification, a first other end surface 773 is configured to be positioned on the other side in the radial direction with respect to a second other end surface 783, and the second other end surface 783 is configured to be positioned on the other side in the radial direction with respect to a third other end surface 793. In addition, a third one end surface 794 is configured to be positioned on one side in the radial direction with respect to a second one end surface 784, and the second one end surface 784 is configured to be positioned on one side in the radial direction with respect to a first one end surface 774.

### <Sixth Modification>

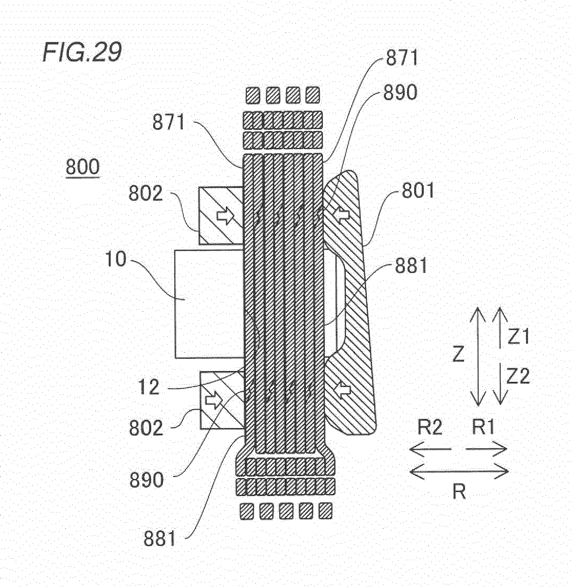

In the embodiment described above, in addition, the first slot housed portion and the second slot housed portion are joined to each other in the slot. However, the present invention is not limited thereto. For example, as in a stator 800 according to a sixth modification illustrated in FIG. 29, a first leg portion 871 of a first segment conductor 870 and a second leg portion 881 of a second segment conductor 880 may be joined to each other at a joint portion 890 on the axially outer side with respect to the slot 12. In this case, the joint portion 890 is pressed in the state of being interposed between a first pressing jig 801 and a second pressing jig 802 in the radial direction to be joined.

### <Other Modifications>

In the embodiment described above, in addition, the armature according to the present invention is constituted as a stator. However, the present invention is not limited thereto. For example, the armature according to the present invention may be constituted as a rotor that has a rotor core and a coil (segment conductors).

In the embodiment described above, in addition, the opening portions are formed on the radially inner side of the stator. However, the present invention is not limited thereto. For example, the opening portions may be formed on the radially outer side of the stator.

In the embodiment described above, in addition, the coil is formed as a wave-wound coil. However, the present invention is not limited thereto. For example, the coil may be formed as a distributed wound coil or a concentrated wound coil.

In the embodiment described above, in addition, the segment conductors are formed to have a rectangular cross-sectional shape. However, the present invention is not limited thereto. That is, the segment conductors may be formed to have a cross-sectional shape (such as a circular shape and an elliptical shape) other than the rectangular shape.

In the embodiment described above, in addition, the slots are constituted as semi-open slots (with the opening width being smaller than the slot width). However, the present invention is not limited thereto. For example, the slots may be constituted as full-open slots with the opening width being equal to the slot width if the characteristics of the stator (armature) are not affected significantly. For the characteristics of the stator, semi-open slots are more preferable than full-open slots.

In the embodiment described above, in addition, the second one end surface is pressed by the pressing jig, and the first other end surface is pressed by the wall portion of the stator core. However, the present invention is not limited thereto. That is, in the case where the first facing surface directs to the radially outer side and the second facing surface directs to the radially inner side as the direction of inclination of the first facing surface is opposite to that according to the embodiment described above, preferably, the first other end surface is pressed by the pressing jig, and the second one end surface is pressed by the wall portion of the stator core.

In the embodiment described above, in addition, the first deviation width d1 and the second deviation width d2 are generally equal to each other. However, the present invention is not limited thereto. That is, the first deviation width d1 and the second deviation width d2 may be different from each other. If the first deviation width d1 and the second deviation width d2 are equal to each other, the length of the conductor wire for the first slot housed portion in the radial direction and the length of the conductor wire for the second slot housed portion in the radial direction can be made equal to each other, and thus the material can be commonalized between the first slot housed portion and the second slot housed portion.

In the embodiment described above, in addition, the inclination angle θ1 of the first joint surface is larger than the inclination angle θ2 of the first inverse inclination surface. However, the present invention is not limited thereto. That is, the inclination angle θ1 of the first joint surface may be equal to or less than the inclination angle θ2 of the first inverse inclination surface if there is no problem with the width W31 of the first slot housed portion being smaller.

In the embodiment described above, in addition, the area S11 of the first joint surface is larger than the area S12 of the first inverse inclination surface. However, the present invention is not limited thereto. That is, the area S11 of the first joint surface may be equal to or less than the area S12 of the first inverse inclination surface if there is no problem in the joint area being smaller.

In the embodiment described above, in addition, the first facing surface and the second facing surface are formed asymmetrically about the center point C2. However, the present invention is not limited thereto. For example, the first facing surface and the second facing surface may be formed point-symmetrically about the center point C2 in the case where a sufficient area of the first joint surface and a sufficient area of the second joint surface can be secured even if the first facing surface and the second facing surface are formed point-symmetrically about the center point C2.

In the embodiment described above, in addition, the first facing surface and the second facing surface are formed asymmetrically about the center point C2. However, the present invention is not limited thereto. For example, the first facing surface and the second facing surface may be formed point-symmetrically about the center point C2 in the case where a sufficient area of the first joint surface and a sufficient area of the second joint surface can be secured even if the first facing surface and the second facing surface are formed point-symmetrically about the center point C2.

In the embodiment described above, in addition, the slot housed portion is provided with the insulating member. However, the present invention is not limited thereto. For example, the slot housed portion may not be provided with the insulating member in the case where the insulating coating of the segment conductor has a sufficient thickness (equal to or more than the thickness t2).

In the embodiment described above, in addition, the distal end of the first slot housed portion is formed as a flat surface. However, the present invention is not limited thereto. For example, the distal end of the first slot housed portion may be formed in a pointed shape (tapered shape) in the case where the effect of a dimensional error of the segment conductor is small.

In the embodiment described above, in addition, the power conductor joint step and the neutral point conductor joint step are performed in the step of forming the segment conductors. However, the present invention is not limited thereto. For example, the power conductor joint step and the neutral point conductor joint step may be performed after the step of disposing the segment conductors in the slots is performed. In this case, a welding tool space is required in the vicinity of the power conductors and the neutral point conductors with the stator in the completed state. Therefore, from the viewpoint of preventing an increase in the size of the stator, the power conductor joint step and the neutral point conductor joint step are preferably performed before the step of disposing the segment conductors in the slots as in the embodiment described above.

In the embodiment described above, in addition, the coil portion is constituted (connected) through a Y connection of four parallel segment conductors (four-parallel connection). However, the present invention is not limited thereto. For example, the coil portion may be constituted through a Y connection of components other than four parallel segment conductors, or may be constituted through a Δ connection.

In the embodiment described above, in addition, a method of pressing the first other end surface or the second one end surface and a method of heating the joint material are described. However, the present invention is not limited thereto. That is, the first other end surface or the second one end surface may be pressed and the joint material may be heated by a method other than the pressing method and the heating method according to the embodiment described above.

### Description of the Reference Numerals

10 STATOR CORE (ARMATURE CORE)
11a WALL PORTION (PART OF ARMATURE CORE, PRESSING PORTION)
12 SLOT
12a OPENING PORTION
30 COIL PORTION
40 SEGMENT CONDUCTOR
40a INSULATING COATING
42a, 42b SLOT HOUSED PORTION (LEG PORTION)
43 COIL END PORTION (ONE COIL END PORTION, OTHER COIL END PORTION)
70 FIRST SEGMENT CONDUCTOR
71, 371, 471, 571, 671, 771, 871 FIRST SLOT HOUSED PORTION (FIRST LEG PORTION)
72, 372, 572, 672, 772 FIRST FACING SURFACE (FIRST INCLINED SURFACE)
72a FIRST JOINT SURFACE
72b FIRST INVERSE INCLINATION SURFACE
72c FIRST SPACED FACING SURFACE (SPACED FACING SURFACE)
73, 373, 473, 573, 673, 773 FIRST OTHER END SURFACE
74, 374, 474, 574, 674, 774 FIRST ONE END SURFACE
75 DISTAL END (DISTAL END PORTION, FLAT SURFACE)
80 SECOND SEGMENT CONDUCTOR
81, 381, 481, 581, 681, 781, 881 SECOND SLOT HOUSED PORTION (SECOND LEG PORTION)
83, 383, 483, 583, 683, 783 SECOND OTHER END SURFACE
84, 384, 484, 584, 684, 784 SECOND ONE END SURFACE
100, 300, 400, 500, 600, 700, 800 STATOR (ARMATURE)
111 SECOND STEPPED PORTION (STEPPED PORTION)
112 FIRST STEPPED PORTION (STEPPED PORTION)
130 JOINT MATERIAL
200 PRESSING JIG (PRESSING PORTION)
390 BOUNDARY PORTION
472 FIRST FACING SURFACE
791 THIRD SLOT HOUSED PORTION (SECOND LEG PORTION)

## Claims

1. An armature comprising:
an armature core provided with a plurality of slots that extend in a center axis direction; and
a coil portion that includes a plurality of segment conductors that have leg portions disposed in the armature core, and in which a first leg portion of a first segment conductor disposed on one side in the center axis direction, among the plurality of segment conductors, and a second leg portion of a second segment conductor disposed on the other side in the center axis direction are joined to each other, wherein:
the first leg portion includes a first facing surface which faces the second leg portion and at least a part of which directs to one side in a radial direction of the armature core, and a first other end surface that directs to the other side in the radial direction;
the second leg portion includes a second facing surface which faces the first facing surface and at least a part of which directs to the other side in the radial direction, and a second other end surface that directs to the other side in the radial direction and that is continuous with the second facing surface; and
at least a part of the first facing surface and at least a part of the second facing surface are joined to each other, and the first other end surface is disposed so as to project toward the other side in the radial direction with respect to the second other end surface.

2. The armature according to claim 1, wherein:
the first other end surface is an end surface of the first leg portion on the other side in the radial direction that extends along the center axis direction;
the second other end surface is an end surface of the second leg portion on the other side in the radial direction that extends along the center axis direction; and
a distal end portion of the first other end surface on the other side in the center axis direction and a distal end portion of the second other end surface on one side in the center axis direction are disposed as spaced with a clearance between the distal end portions in the center axis direction.

3. The armature according to claim 2, wherein:
the first leg portion includes a first one end surface which is an end surface provided on an opposite side from the first other end surface in the radial direction and extending along the center axis direction, the first one end surface being continuous with the first facing surface;
the second leg portion includes a second one end surface which is an end surface provided on an opposite side from the second other end surface in the radial direction and extending along the center axis direction, the second one end surface directing to one side in the radial direction;
the second one end surface is disposed so as to project toward one side in the radial direction with respect to the first one end surface; and
a distal end portion of the first one end surface on the other side in the center axis direction and a distal end portion of the second one end surface on one side in the center axis direction are disposed as spaced with a clearance between the distal end portions in the center axis direction.

4. The armature according to any one of claims 1 to 3, wherein
a stepped portion is formed at a boundary portion between the first other end surface and the second other end surface.

5. The armature according to claim 4, wherein:
the first other end surface is an end surface of the first leg portion on the other side in the radial direction that extends along the center axis direction;
the second other end surface is an end surface of the second leg portion on the other side in the radial direction that extends along the center axis direction; and
the stepped portion is shaped such that a distal end portion of the first other end surface on the other side in the center axis direction projects toward the other side in the radial direction with respect to a distal end portion of the second other end surface on one side in the center axis direction.

6. The armature according to any one of claims 1 to 5, wherein:
the first leg portion includes a first one end surface provided on an opposite side from the first other end surface in the radial direction, the first one end surface being continuous with the first facing surface;
the second leg portion includes a second one end surface provided on an opposite side from the second other end surface in the radial direction, the second one end surface directing to one side in the radial direction; and
the second one end surface is disposed so as to project toward one side in the radial direction with respect to the first one end surface.

7. The armature according to claim 6, wherein:
the armature core is provided with a wall portion on the other side in the radial direction with respect to the first other end surface; and
the slots are each provided with an opening portion on one side in the radial direction with respect to the second one end surface.

8. The armature according to claim 6 or 7, wherein
a first deviation width, which is a width of deviation between a position of the first other end surface in the radial direction and a position of the second other end surface in the radial direction, is equal to a second deviation width, which is a width of deviation between a position of the first one end surface in the radial direction and a position of the second one end surface in the radial direction.

9. The armature according to any one of claims 1 to 8, wherein
a first deviation width, which is a width of deviation between a position of the first other end surface in the radial direction and a position of the second other end surface in the radial direction, is equal to or more than a thickness of an insulating coating of the segment conductor.

10. The armature according to any one of claims 1 to 9, wherein:
the first facing surface of the first segment conductor has a first inclined surface inclined with respect to the center axis direction; and
the second facing surface of the second segment conductor has a second inclined surface inclined with respect to the center axis direction.

11. The armature according to claim 10, wherein
the first inclined surface includes a joint surface to be joined to the second inclined surface, and an inverse inclination surface inclined in an opposite direction to a direction in which the joint surface is inclined with respect to the center axis direction.

12. The armature according to claim 11, wherein
an inclination angle of the inverse inclination surface with respect to the center axis direction is smaller than an inclination angle of the joint surface with respect to the center axis direction.

13. The armature according to claim 11 or 12, wherein
an area of the joint surface is larger than an area of the inverse inclination surface.

14. The armature according to any one of claims 11 to 13, wherein
the first inclined surface includes a spaced facing surface formed to be continuous with the inverse inclination surface on an opposite side from the joint surface and disposed as spaced from the second inclined surface.

15. The armature according to any one of claims 10 to 14, wherein
the first inclined surface is formed such that a sectional surface of the first inclined surface taken along the radial direction has an S-shape.

16. The armature according to any one of claims 10 to 15, wherein
the first inclined surface and the second inclined surface are formed such that a sectional surface of each of the first and second inclined surfaces taken along the radial direction has an asymmetrical shape with respect to a center point of the first inclined surface.

17. The armature according to any one of claims 1 to 16, wherein:
a plurality of the first leg portions are disposed adjacent to each other in the radial direction;
the first facing surface of one of the plurality of the first leg portions is disposed at a different position in the center axis direction from the first facing surface of a different first leg portion that is adjacent to the one of the plurality of the first leg portions in the radial direction; and
the first other end surface of each of the plurality of the first leg portions is disposed so as to project toward the other side in the radial direction with respect to the corresponding second other end surface.

18. The armature according to any one of claims 1 to 17, wherein
a distal end portion of the first leg portion and a distal end portion of the second leg portion are each formed to have a flat surface that is orthogonal to the center axis direction.

19. The armature according to any one of claims 1 to 18, wherein:
the first segment conductor includes one coil end portion formed to be continuous with the first leg portion and disposed on one side in the center axis direction with respect to the armature core; and
the second segment conductor includes the other coil end portion formed to be continuous with the second leg portion and disposed on the other side in the center axis direction with respect to the armature core.

20. A method of manufacturing an armature that includes an armature core provided with a plurality of slots that extend in a center axis direction and a coil portion that includes a plurality of segment conductors having leg portions disposed in the armature core, the plurality of leg portions being joined to each other, the method comprising:
a step of disposing the plurality of segment conductors in the armature core such that at least a part of a first surface of a first leg portion of a first segment conductor, among the plurality of segment conductors, directs to one side in a radial direction of the armature core, a first other end surface of the first leg portion directs to the other side in the radial direction, at least a part of a second surface of a second leg portion of a second segment conductor, among the plurality of segment conductors, and a second other end surface which is continuous with the second surface direct to the other side in the radial direction, the first leg portion is disposed on one side in the center axis direction, and the second leg portion is disposed on the other side in the center axis direction; and
a step of forming the coil portion by pressing the first segment conductor toward one side in the radial direction, by use of a pressing portion which is composed of a part of the armature core or a pressing jig, while the pressing portion contacting the first other end surface with the first other end surface disposed so as to project toward the other side in the radial direction with respect to the second other end surface, and by joining at least a part of the first surface of the first segment conductor and at least a part of the second surface of the second segment conductor to each other.

21. The method of manufacturing an armature according to claim 20, wherein:
the step of disposing the plurality of segment conductors is a step of disposing the plurality of segment conductors in the armature core with a joint material disposed on one of the first surface and the second surface; and
the step of forming the coil portion is a step of joining the at least a part of the first surface of the first segment conductor and the at least a part of the second surface of the second segment conductor to each other by pressing the first segment conductor toward one side in the radial direction by use of the pressing portion with the first surface and the second surface contacting each other via the joint material and with the first other end surface disposed so as to project toward the other side in the radial direction with respect to the second other end surface, and by heating and curing the joint material.

22. The method of manufacturing an armature according to claim 20 or 21, wherein:
the first other end surface is an end surface of the first leg portion on the other side in the radial direction that extends along the center axis direction;
the second other end surface is an end surface of the second leg portion on the other side in the radial direction that extends along the center axis direction; and
the step of disposing the plurality of segment conductors is a step of disposing the plurality of segment conductors in the armature core such that a distal end portion of the first other end surface on the other side in the center axis direction and a distal end portion of the second other end surface on one side in the center axis direction are spaced with a clearance between the distal end portions in the center axis direction.

23. The method of manufacturing an armature according to claim 22, wherein:
the first leg portion includes a first one end surface which is an end surface provided on an opposite side from the first other end surface in the radial direction and extending along the center axis direction, the first one end surface being continuous with the first surface;
the second leg portion includes a second one end surface which is an end surface provided on an opposite side from the second other end surface in the radial direction and extending along the center axis direction, the second one end surface directing to one side in the radial direction; and
the step of disposing the plurality of segment conductors is a step of disposing the plurality of segment conductors in the armature core such that the second one end surface projects toward one side in the radial direction with respect to the first one end surface and a distal end portion of the first one end surface on the other side in the center axis direction and a distal end portion of the second one end surface on one side in the center axis direction are spaced with a clearance between the distal end portions in the center axis direction.
